# EUROPEAN PATENT APPLICATION

(11) **EP 3 820 222 A1**
(43) Date of publication of application: **12.05.2021**
(21) Application number: 19851593.4
(22) Date of filing: 19.08.2019
(51) Int. Cl.: H04W 72/04, H04W 72/08

(54) **METHOD AND APPARATUS FOR DETERMINING UPLINK RESOURCE**

(30) Priority: 22.08.2018 CN 201810960888
(71) Applicant: Huawei Technologies Co., Ltd., Longgang Shenzhen, Guangdong 518129 (CN)
(72) Inventor: YUAN, Shitong, Shenzhen, Guangdong 518129 (CN); GUAN, Peng, Shenzhen, Guangdong 518129 (CN); CHEN, Lei, Shenzhen, Guangdong 518129 (CN); ZHANG, Xi, Shenzhen, Guangdong 518129 (CN)
(74) Representative: Epping - Hermann - Fischer
(86) International application number: PCT/CN2019/101364
(87) International publication number: WO 2020/038331

(57) **Abstract**

This application provides a method and an apparatus for determining an uplink resource. The method includes: determining a target uplink resource in resources on a plurality of uplink carriers; and sending, to a network device message by using the target uplink resource, a beam failure recovery request message. In this case, when there are the plurality of uplink carriers, a resource used for the beam failure recovery may be determined by a terminal device on the plurality of uplink carriers, to improve efficiency of the beam failure recovery.

## Description

This application claims priority to Chinese Patent Application No. 201810960888.1, filed with the Chinese Patent Office on August 22, 2018 and entitled "METHOD AND APPARATUS FOR DETERMINING UPLINK RESOURCE", which is incorporated herein by reference in its entirety.

### TECHNICAL FIELD

This application relates to the communications field, and more specifically, to a method and an apparatus for determining an uplink resource.

### BACKGROUND

Generally, a cell includes a downlink carrier and anuplink carrier. When performing uplink transmission, a terminal device selects a resource used for the uplink transmission from a resource on the uplink carrier.

In some scenarios, the terminal device has a plurality of uplink carriers used for the uplink transmission. For example, when a high-frequency cell is deployed, due to relatively low transmit power of the terminal device and a relatively high running frequency band, the terminal device in a cell-edge area may receive a signal of a network device, but the network device cannot receive a signal of the terminal device. For this problem, a supplementary uplink (supplementary uplink, SUL) carrier is introduced into a new radio (new radio, NR) system to assist the terminal device in performing the uplink transmission. To be specific, in a cell that supports the SUL carrier, the terminal device may have two spectrums for the uplink transmission. One spectrum may be referred to as an NR uplink (NR uplink, NUL) carrier, and the other spectrum may be referred to as an SUL carrier.

Currently, there is no solution for determining a resource used for uplink transmission when the terminal device has the plurality of uplink carriers. For example, there is no solution for determining a resource used for beam failure recovery (beam failure recovery, BFR) when the terminal device has the plurality of uplink carriers.

### SUMMARY

This application provides a method and an apparatus for determining an uplink resource. In this way, when a terminal device has a plurality of uplink carriers, the terminal device can determine a resource used for uplink transmission in the plurality of uplink carriers, for example, determine a resource used for BFR, to improve efficiency of the BFR.

According to a first aspect, a method for determining an uplink resource is provided. The method is performed by a terminal device or a chip used in a terminal device. The method includes: determining a target uplink resource in resources on a plurality of uplink carriers; and sending, to a network device, a beam failure recovery request (beam failure recovery request, BFRQ) message by using the target uplink resource.

A resource used for beam failure recovery (BFR) in a current cell, that is, the resource used to send the BFRQ message is configured on the plurality of uplink carriers. The current cell indicates a cell in which a beam failure occurs. The uplink resource used for the BFR may be a random access (random access channel, RACH) resource.

The target uplink resource is the resource used for the BFR on one of the plurality of uplink carriers.

In this application, when there are a plurality of uplink carriers used for the beam failure recovery, the target uplink resource used to send the beam failure recovery request message is determined to improve efficiency of the beam failure recovery.

Optionally, the resource used for the BFR on the plurality of uplink carriers may be preconfigured by the network device. For example, the network device may preconfigure, for the terminal device by using radio resource control (radio resource control, RRC) signaling, the resource used for the BFR on the plurality of uplink carriers. The network device may further preconfigure, by using other downlink signaling, the resource used for the BFR on the plurality of uplink carriers. This is not limited in this application.

Optionally, the plurality of uplink carriers may be all low-frequency carriers, or may be all high-frequency carriers; or some uplink carriers of the plurality of uplink carriers may be high-frequency carriers, and the other uplink carriers of the plurality of uplink carriers may be low-frequency carriers. Herein, "high-frequency" and "low-frequency" mentioned in this specification are relative concepts. Meanings of the two concepts are not strictly limited. For example, the low-frequency carrier may indicate a carrier operating below 6 GHz, and the high-frequency carrier may indicate a carrier operating at or above 6 GHz. For another example, in a future evolved technology, the high-frequency carrier and the low-frequency carrier may have new definitions.

In a scenario in which the current cell includes a primary uplink carrier and a supplementary uplink carrier, the plurality of uplink carriers include the primary uplink carrier and the supplementary uplink carrier. For example, in a scenario in which a cell supports an SUL technology, the primary uplink carrier is an NUL carrier, and the supplementary uplink carrier is an SUL carrier.

In a carrier aggregation scenario, the current cell is a primary cell. When it is allowed to use an uplink carrier of a secondary cell for BFR in the primary cell, the plurality of uplink carriers may include an uplink carrier of the primary cell and an uplink carrier of the secondary cell. If the primary cell supports the SUL technology, the plurality of uplink carriers may include an NUL carrier and an SUL carrier of the primary cell, and an uplink carrier of the secondary cell. If the secondary cell also supports the SUL technology, the plurality of uplink carriers may include an NUL carrier and an SUL carrier of the primary cell, and an NUL carrier and an SUL carrier of the secondary cell.

A contention-free resource and/or a contention-based resource may be configured on the plurality of uplink carriers. A contention-free resource used forBFR may be a contention-free random access resource (contention-free RACH resource), and a contention-based resource used for BFR may be a contention-based random access resource (contention-based RACH resource).

Optionally, a resource used to send an uplink scheduling request (scheduling request, SR), a preconfigured semi-static or grant-free uplink resource, a physical uplink control channel (physical uplink control channel, PUCCH) resource, or another uplink resource may be further configured on the plurality of uplink carriers. Another contention-free resource other than the contention-free random access resource and/or another contention-based resource other than the contention-based access resource may be further configured on the plurality of uplink carriers. In this application, the target uplink resource may be determined in the resources on the plurality of uplink carriers in a plurality of implementations.

With reference to the first aspect, in a possible implementation of the first aspect, the determining a target uplink resource in resources on a plurality of uplink carriers includes: when at least one of the plurality of uplink carriers has a contention-free resource, determining a contention-free resource on an uplink carrier Y in the at least one uplink carrier as the target uplink resource.

In a scenario in which the current cell supports the SUL technology, the uplink carrier Y may be an NUL carrier, or may be an SUL carrier.

In a carrier aggregation scenario, the uplink carrier Y may be an uplink carrier of the primary cell, or may be an uplink carrier of the secondary cell.

In this implementation, the contention-free random access resource is preferentially selected as the target uplink resource. In a process of selecting the target uplink resource from the plurality of uplink carriers, whether the plurality of uplink carriers have an available contention-free random access resource is first determined. If the plurality of uplink carriers have the available contention-free random access resource, a contention-free random access resource on an uplink carrier is used as the target uplink resource. If the plurality of uplink carriers do not have the available contention-free random access resource, a contention-based random access resource on an uplink carrier is used as the target uplink resource.

It should be understood that no collision (collision) occurs and no collision needs to be resolved when the terminal device uses a contention-free random access resource to initiate random access. Therefore, in comparison with a case in which the terminal device uses a contention-based random access resource to initiate random access, the terminal device has a shorter access delay and a higher access success rate when the terminal device uses the contention-free random access resource to initiate the random access. In this way, in this application, the contention-free random access resource is preferentially selected from the plurality of uplink carriers to send the beam failure recovery request message, thereby improving efficiency and a success rate of the beam failure recovery.

With reference to the first aspect, in a possible implementation of the first aspect, the plurality of uplink carriers include the primary uplink carrier and the supplementary uplink carrier of the current cell. The determining a contention-free resource on an uplink carrier in the at least one uplink carrier as the target uplink resource includes: when the at least one uplink carrier includes the primary uplink carrier, determining a contention-free resource on the primary uplink carrier as the target uplink resource.

In this implementation, the contention-free random resource on the primary uplink carrier is preferentially selected as the target uplink resource.

With reference to the first aspect, in a possible implementation of the first aspect, the plurality of uplink carriers include an NUL carrier and an SUL carrier. The determining a target uplink resource in a plurality of uplink carriers includes: preferentially selecting a contention-free random access resource on the NUL carrier as the target uplink resource.

In a process of selecting the target uplink resource from the plurality of uplink carriers, whether the NUL carrier has an available contention-free random access resource is first determined. If the NUL carrier has the available contention-free random access resource, the contention-free random access resource on the NUL carrier is used as the target uplink resource. If the NUL carrier does not have the available contention-free random access resource, a contention-based random access resource on the NUL carrier or a random access resource on the SUL carrier is used as the target uplink resource.

Further, if the NUL carrier does not have the available contention-free random access resource, whether the SUL carrier has a contention-free random access resource is first determined. If the SUL carrier has the contention-free random access resource, the contention-free random access resource on the SUL carrier is used as the target uplink resource. If the SUL carrier does not have the available contention-free random access resource, a contention-based random access resource on the SUL carrier or the contention-based random access resource on the NUL carrier is used as the target uplink resource.

It should be understood that, because the NUL carrier may operate on a high frequency band, a greater subcarrier spacing defined in a protocol may be used for transmission. In this case, each corresponding symbol time (an absolute time) is shorter. Therefore, in comparison with the SUL carrier, random access resources on the NUL carrier may be configured in a denser manner. In this way, the terminal device can have more opportunities to use resources in a relatively short time. Therefore, the contention-free random access resource on the NUL carrier is preferentially selected to reduce a transmission delay.

Therefore, in this application, when the terminal device has the plurality of uplink carriers, the contention-free random access resource on the NUL carrier in the plurality of uplink carriers is preferentially selected to send the BFRQ message, thereby reducing a BFR delay and effectively improving BFR efficiency.

In addition, the NUL carrier has a relatively large total quantity of contention-free random access resources. The resources may be contention-free random access resources associated with a downlink narrow beam (for example, a CSI-RS) configuration. In this case, after completing the BFR, the terminal device may not perform beam sweeping and beam training again, so that the terminal device can have a shorter data transmission recovery delay. Therefore, the contention-free random access resource on the NUL carrier is preferentially selected, thereby reducing a BFR delay and improving BFR efficiency.

With reference to the first aspect, in a possible implementation of the first aspect, the plurality of uplink carriers include the primary uplink carrier and the supplementary uplink carrier of the current cell. The determining a contention-free resource on an uplink carrier in the at least one uplink carrier as the target uplink resource includes: when the at least one uplink carrier includes the supplementary uplink carrier, determining a contention-free resource on the supplementary uplink carrier as the target uplink resource.

In this implementation, the contention-free random resource on the supplementary uplink carrier is preferentially selected as the target uplink resource.

With reference to the first aspect, in a possible implementation of the first aspect, the plurality of uplink carriers include an NUL carrier and an SUL carrier. The determining a target uplink resource in a plurality of uplink carriers includes: preferentially selecting a contention-free random access resource on the SUL carrier as the target uplink resource.

In a process of selecting the target uplink resource from the plurality of uplink carriers, whether the SUL carrier has an available contention-free random access resource is first determined. If the SUL carrier has the available contention-free random access resource, the contention-free random access resource on the SUL carrier is used as the target uplink resource. If the SUL carrier does not have the available contention-free random access resource, a contention-based random access resource on the SUL carrier or a random access resource on the NUL carrier is used as the target uplink resource.

In an implementation, if the SUL carrier does not have the available contention-free random access resource, whether the SUL carrier has the contention-based random access resource is first determined. If the SUL carrier has the contention-based random access resource, the contention-based random access resource on the SUL carrier is used as the target uplink resource. If the SUL carrier does not have the available contention-based random access resource, a contention-based random access resource (preferentially, a contention-free random access resource) on the NUL carrier is used as the target uplink resource.

In another implementation, if the SUL carrier does not have the available contention-free random access resource, whether the NUL carrier has a contention-free random access resource is first determined. If the NUL carrier has the contention-free random access resource, the contention-free random access resource on the NUL carrier is used as the target uplink resource. If the NUL carrier does not have the available contention-free random access resource, the contention-based random access resource on the SUL carrier or a contention-based random access resource on the NUL carrier is used as the target uplink resource.

In other words, a contention-free random access resource on an uplink carrier with a relatively low frequency band/center frequency in the plurality of uplink carriers is preferentially used to send the BFRQ message.

It should be understood that, the terminal device has limited transmit power, and when the terminal device sends signals by using same power, a path loss of a low-frequency signal is smaller than that of a high-frequency signal in free space. The SUL carrier operates on a relatively low frequency band relative to the NUL carrier, and has better uplink coverage than the NUL carrier. Therefore, the contention-free random access resource on the SUL carrier is preferentially used to send the BFRQ message, to improve transmission reliability of the BFRQ message, thereby improving success probability of BFR. For example, in a beam failure scenario in a high-frequency system, the BFRQ message may be sent by preferentially using the contention-free random access resource on the SUL carrier.

It should be noted that the solution that is proposed in this application and in which the contention-free random access resource on the plurality of uplink carriers is preferentially selected as the target uplink resource does not absolutely limit use priorities of all contention-free random access resources on the plurality of uplink carriers to be higher than those of all contention-based random access resources on the plurality of uplink carriers. For example, in a solution of preferentially selecting the contention-free random resource on the SUL carrier as the target uplink resource, a use priority of the contention-free random access resource on the NUL carrier may be lower than that of the contention-based random access resource on the SUL carrier.

Therefore, in this application, when the terminal device has the plurality of uplink carriers, the contention-free random access resource on the SUL carrier in the plurality of uplink carriers is preferentially selected to send the BFRQ message. It should be understood that, the terminal device has limited transmit power, and when the terminal device sends signals by using same power, a path loss of a low-frequency signal is smaller than that of a high-frequency signal in free space. The SUL carrier operates on a relatively low frequency band relative to the NUL carrier, and has better uplink coverage than the NUL carrier. Therefore, the contention-free random access resource on the SUL carrier is preferentially used to send the BFRQ message, to improve transmission reliability of the BFRQ message, thereby improving success probability of BFR.

With reference to the first aspect, in a possible implementation of the first aspect, the plurality of uplink carriers include an NUL carrier and an SUL carrier. Selecting the target uplink resource from the plurality of uplink carriers includes: when it is detected that quality of a candidate beam of the current cell exceeds a threshold, preferentially selecting a contention-free random resource on the NUL carrier as the target uplink resource; or when it is detected that quality of a candidate beam of the current cell is lower than a threshold, preferentially selecting a contention-free random resource on the SUL carrier as the target uplink resource.

The terminal device may obtain the quality of the candidate beam through measurement.

The quality of the candidate beam may be reference signal received power (reference signal receiving power, RSRP) or reference signal received quality (reference signal receiving quality, RSRQ) of the candidate beam.

The threshold used to measure the quality of the candidate beam may be specified in a protocol. Alternatively, the threshold used to measure the quality of the candidate beam may be configured by the network device. For example, the network device may configure the threshold by using RRC signaling or other downlink signaling.

With reference to the first aspect, in a possible implementation of the first aspect, the determining a target uplink resource in resources on a plurality of uplink carriers includes: when the plurality of uplink carriers do not have an available contention-free resource, determining a contention-based resource on one of the plurality of uplink carriers as the target uplink resource.

Optionally, in this implementation, the determining a contention-based resource on one of the plurality of uplink carriers as the target uplink resource includes: determining a contention-based resource on the supplementary uplink carrier as the target uplink resource.

With reference to the first aspect, in a possible implementation of the first aspect, the plurality of uplink carriers include a primary uplink carrier and a supplementary uplink carrier of a current primary cell, and an uplink carrier of a secondary cell. The determining a target uplink resource in resources on a plurality of uplink carriers includes: when the primary uplink carrier of the primary cell does not have an available contention-free resource, determining a contention-free resource on the uplink carrier of the secondary cell as the target uplink resource; or when both the primary uplink carrier and the supplementary uplink carrier of the primary cell do not have available resource, determining a resource on the uplink carrier of the secondary cell as the target uplink resource.

In an implementation, in a process of selecting the target uplink resource from the plurality of uplink carriers, whether the NUL carrier of the primary cell has an available contention-free random access resource is first determined. If the NUL carrier of the primary cell has an available contention-free random access resource, the contention-free random access resource on the NUL carrier is used as the target uplink resource. If the NUL carrier of the primary cell does not have an available contention-free random access resource, whether the uplink carrier of the secondary cell has an available contention-free random access resource is determined. If the uplink carrier of the secondary cell has the available contention-free random access resource, the contention-free random access resource on the uplink carrier of the secondary cell is selected as the target uplink resource. Otherwise, whether the SUL carrier of the primary cell has an available contention-free random access resource is determined. If the SUL carrier of the primary cell has the available contention-free random access resource, the contention-free random access resource on the SUL carrier of the primary cell is used as the target uplink resource. If none of the uplink carriers of the primary cell and the secondary cell has an available contention-free random access resource, a contention-based random access resource on an uplink carrier of the primary cell or the secondary cell is used as the target uplink resource.

In an implementation, in a process of selecting the target uplink resource from the plurality of uplink carriers, whether the NUL carrier of the primary cell has an available contention-free random access resource is first determined. If the NUL carrier of the primary cell has the available contention-free random access resource, the contention-free random access resource on the NUL carrier is used as the target uplink resource. If the NUL carrier of the primary cell does not have the available contention-free random access resource, whether the SUL carrier of the primary cell has an available contention-free random access resource is determined. If the SUL carrier of the primary cell has the available contention-free random access resource, the contention-free random access resource is used as the target uplink resource. Otherwise, whether the uplink carrier of the secondary cell has an available contention-free random access resource is determined. If the uplink carrier of the secondary cell has the available contention-free random access resource, the contention-free random access resource is used as the target uplink resource. If none of the uplink carriers of the primary cell and the secondary cell has an available contention-free random access resource, a contention-based random access resource on an uplink carrier of the primary cell or the secondary cell is used as the target uplink resource.

With reference to the first aspect, in a possible implementation of the first aspect, the determining a target uplink resource in a plurality of uplink carriers includes: selecting a target uplink carrier from the plurality of uplink carriers based on preset priority information, where the preset priority information is used to indicate a resource use sequence of the plurality of uplink carriers; and determining the target uplink resource on the target uplink carrier.

For example, a resource use priority is the contention-free random access resource on the NUL carrier > the contention-free random access resource on the SUL carrier > the contention-based random access resource on the SUL carrier > the contention-based random access resource on the NUL carrier.

For another example, a resource use priority is the contention-free random access resource on the SUL carrier > the contention-based random access resource on the SUL carrier > the contention-free random access resource on the NUL carrier > the contention-based random access resource on the NUL carrier. Alternatively, a resource use priority is the contention-free random access resource on the SUL carrier > the contention-free random access resource on the NUL carrier > the contention-based random access resource on the SUL carrier > the contention-based random access resource on the NUL carrier.

For another example, in a carrier aggregation scenario, a resource use priority is the contention-free random access resource on the NUL carrier of the primary cell > the contention-free random access resource on the SUL carrier of the primary cell > the contention-free random access resource on the uplink carrier of the secondary cell > the contention-based random access resource on the SUL carrier of the primary cell > the contention-based random access resource on the NUL carrier of the primary cell > the contention-based random access resource on the uplink carrier of the secondary cell. Alternatively, a resource use priority is the contention-free random access resource on the SUL carrier of the primary cell > the contention-free random access resource on the NUL carrier of the primary cell > the contention-free random access resource on the uplink carrier of the secondary cell > the contention-based random access resource on the SUL carrier of the primary cell > the contention-based random access resource on the NUL carrier of the primary cell > the contention-based random access resource on the uplink carrier of the secondary cell.

Optionally, the resource use priority may indicate a use priority sequence of the plurality of uplink resources, or may directly indicate a resource type with a highest priority.

Optionally, the resource use priority may be specified in a protocol.

Optionally, the resource use priority may be configured by the network device. For example, the network device may configure the resource use priority for the terminal device by using RRC signaling or other downlink signaling.

For example, when there are a plurality of types of uplink resources, the network device may configure the use priority sequence of the resources, or may directly indicate the resource type with the highest priority.

With reference to the first aspect, in a possible implementation of the first aspect, in a carrier aggregation scenario, a resource on the uplink carrier of the primary cell or a resource on the uplink carrier of the secondary cell is selected as the target uplink resource based on quality of a candidate beam of the primary cell and quality of a candidate beam of the secondary cell.

In this implementation, the quality of the candidate beam of the primary cell is compared with the quality of the candidate beam of the secondary cell, to determine whether to preferentially use the resource on the uplink carrier of the primary cell or preferentially use the resource on the uplink carrier of the secondary cell.

The quality of the candidate beam may be RSRP or RSRQ.

Optionally, in this implementation, when a sum of the quality of the candidate beam of the primary cell and a preset offset is greater than or equal to the quality of the candidate beam of the secondary cell, the resource on the uplink carrier of the primary cell is selected as the target uplink resource, that is, the resource on the uplink carrier of the primary cell is preferentially used. When a sum of the quality of the candidate beam of the primary cell and a preset offset is less than the quality of the candidate beam of the secondary cell, the resource on the uplink carrier of the primary cell is selected as the target uplink resource, that is, the resource on the uplink carrier of the secondary cell is preferentially used.

The preset offset may be preconfigured by the network device. For example, the network device preconfigures the preset offset by using RRC signaling or other downlink signaling.

Alternatively, the preset offset may be specified in a protocol.

It should be understood that a resource on an uplink carrier of a cell whose candidate beam has relatively high quality is preferentially selected from the plurality of uplink carriers as the target uplink resource used for the BFR, which helps improve BFR efficiency.

With reference to the first aspect, in a possible implementation of the first aspect, the determining a target uplink resource in resources on a plurality of uplink carriers includes: selecting a target uplink carrier from the plurality of uplink carriers based on beam attributes associated with the resources on the plurality of uplink carriers; and determining a resource on the target uplink carrier as the target uplink resource.

Optionally, this implementation is applied to a scenario in which each of the plurality of uplink carriers has only a contention-based resource or only a contention-free resource.

With reference to the first aspect, in a possible implementation of the first aspect, the plurality of uplink carriers include a first carrier and a second carrier. A resource on the first carrier is associated with a channel state information-reference signal CSI-RS, and a resource on the second carrier is associated with a synchronization signal block SSB. The selecting a target uplink carrier from the plurality of uplink carriers based on beam attributes associated with the resources on the plurality of uplink carriers includes: determining the first carrier as the target uplink carrier.

It should be understood that the SSB is usually considered as a wide beam, and the CSI-RS is usually considered as a narrow beam. For example, a plurality of CSI-RSs may be considered to be quasi-co-located (quasi-co-location, QCL) to one SSB. If a narrow beam is recovered for the terminal device after the beam failure recovery, a beamforming gain can be increased, thereby supporting a higher data rate.

Therefore, in this embodiment of this application, a resource on an uplink carrier whose resource is associated with a CSI-RS is preferentially selected from the plurality of uplink carriers to perform the BFR, so that a greater antenna gain (beamforming gain) can be obtained by using the recovered beam, thereby supporting a higher data rate.

With reference to the first aspect, in a possible implementation of the first aspect, the plurality of uplink carriers include a third carrier and a fourth carrier. A quantity of candidate beams associated with a resource on the third carrier is less than or equal to a quantity of candidate beams associated with a resource on the fourth carrier. The selecting a target uplink carrier from the plurality of uplink carriers based on beam attributes associated with the resources on the plurality of uplink carriers includes: determining the third carrier as the target uplink carrier.

It should be understood that a resource on an uplink carrier whose resource is associated with a relatively small quantity of candidate beams is preferentially selected to perform the BFR, thereby reducing resource costs of the network device and facilitating subsequent beam management.

With reference to the first aspect, in a possible implementation of the first aspect, a beam failure recovery timer (beam failure recovery timer) is configured on the NUL carrier. If the beam failure recovery timer expires, the contention-free random access resource on the NUL carrier is unavailable.

With reference to the first aspect, in a possible implementation of the first aspect, a beam failure recovery timer (beam failure recovery timer) is configured on the SUL carrier. If the beam failure recovery timer expires, the contention-free random access resource on the SUL carrier is unavailable.

The beam failure recovery timer on the NUL carrier and the beam failure recovery timer on the SUL carrier may be configured by the network device. For example, the network device configures the beam failure recovery timer on the NUL carrier and the beam failure recovery timer on the SUL carrier by using RRC signaling or other signaling.

With reference to the first aspect, in a possible implementation of the first aspect, the target uplink resource is a contention-based resource. The method further includes: receiving an association relationship between an uplink carrier and a downlink carrier from the network device; and receiving, by using a downlink carrier associated with the uplink carrier on which the target uplink resource is located, a beam recovery response message sent by the network device.

In the method provided in the first aspect, the beam failure recovery request (BFRQ) message is replaced with an uplink scheduling request message, and the beam failure recovery (BFR) is replaced with uplink scheduling. This solution can be applied to a case of selecting a resource used for the uplink scheduling from a plurality of uplink carriers.

In the method provided in the first aspect, the beam failure recovery request (BFRQ) message is replaced with uplink data, and the beam failure recovery (BFR) is replaced with uplink data transmission. This solution can be applied to a case of selecting a resource used for the uplink data transmission from a plurality of uplink carriers.

According to a second aspect, a method for determining an uplink resource is provided. The method is performed by, for example, a network device or a chip used in a network device. The method includes: sending configuration information to a terminal device, where the configuration information includes information used to indicate the terminal device to select a target uplink resource used for BFR from a plurality of uplink carriers; and receiving a BFRQ message that is sent by the terminal device by using the target uplink resource.

In this application, when there are a plurality of uplink carriers used for the beam failure recovery, the target uplink resource used to send the beam failure recovery request message is determined to improve efficiency of the beam failure recovery.

A resource used for the beam failure recovery (BFR) in a current cell, that is, a resource used to send a beam failure recovery request (BFRQ) message is configured on the plurality of uplink carriers.

With reference to the second aspect, in a possible implementation of the second aspect, the method further includes: The network device configures, for the terminal device, the resource used for the BFR on the plurality of uplink carriers.

For example, the network device may preconfigure, for the terminal device by using radio resource control (radio resource control, RRC) signaling, the resource used for the BFR on the plurality of uplink carriers. The network device may further preconfigure, by using other downlink signaling, the resource used for the BFR on the plurality of carriers. This is not limited in this application.

With reference to the second aspect, in a possible implementation of the second aspect, the configuration information sent to the terminal device includes a resource use priority, and the resource use priority is used to indicate a resource use sequence of the plurality of uplink carriers.

For example, the resource use priority is a contention-free random access resource on an NUL carrier > a contention-free random access resource on an SUL carrier > a contention-based random access resource on the SUL carrier > a contention-based random access resource on the NUL carrier.

For another example, the resource use priority is a contention-free random access resource on an SUL carrier > a contention-based random access resource on the SUL carrier > a contention-free random access resource on an NUL carrier > a contention-based random access resource on the NUL carrier. Alternatively, the resource use priority is a contention-free random access resource on an SUL carrier > a contention-free random access resource on an NUL carrier > a contention-based random access resource on the SUL carrier > a contention-based random access resource on the NUL carrier.

For another example, in a carrier aggregation scenario, the resource use priority is a contention-free random access resource on an NUL carrier of a primary cell > a contention-free random access resource on an SUL carrier of the primary cell > a contention-free random access resource on an uplink carrier of a secondary cell > a contention-based random access resource on the SUL carrier of the primary cell > a contention-based random access resource on the NUL carrier of the primary cell > a contention-based random access resource on the uplink carrier of the secondary cell. Alternatively, the resource use priority is a contention-free random access resource on an SUL carrier of a primary cell > a contention-free random access resource on an NUL carrier of the primary cell > a contention-free random access resource on an uplink carrier of a secondary cell > a contention-based random access resource on the SUL carrier of the primary cell > a contention-based random access resource on the NUL carrier of the primary cell > a contention-based random access resource on the uplink carrier of the secondary cell.

With reference to the second aspect, in a possible implementation of the second aspect, the configuration information sent to the terminal device includes configuration information of a beam failure recovery timer on an NUL carrier. If the beam failure recovery timer expires, a contention-free random access resource on the NUL carrier is unavailable.

With reference to the second aspect, in a possible implementation of the second aspect, the configuration information sent to the terminal device includes configuration information of a beam failure recovery timer on an SUL carrier. If the beam failure recovery timer expires, a contention-free random access resource on the SUL carrier is unavailable.

With reference to the second aspect, in a possible implementation of the second aspect, the configuration information sent to the terminal device includes a candidate beam quality threshold. The threshold is used by the terminal device to measure quality of a candidate beam. In this way, the resource used for the BFR may be selected from the plurality of uplink carriers based on the quality of the candidate beam.

With reference to the second aspect, in a possible implementation of the second aspect, the configuration information sent to the terminal device includes a candidate beam quality offset. The offset is used by the terminal device to select, through comparing quality of a candidate beam of the secondary cell and a sum of quality of a candidate beam of the primary cell and the offset, a resource used for the BFR on an uplink carrier of a primary cell or an uplink carrier of a secondary cell in a carrier aggregation scenario.

The quality of the candidate beam may be RSRP or RSRQ.

With reference to the second aspect, in a possible implementation of the second aspect, the network device sends resource selection information to the terminal device by using RRC signaling or other downlink signaling.

According to a third aspect, a communications apparatus is provided. The communications apparatus is configured to perform the method in the first aspect or any possible implementation of the first aspect. Optionally, the communications apparatus may include a module configured to perform the method in the first aspect or any possible implementation of the first aspect.

According to a fourth aspect, a communications apparatus is provided. The communications apparatus is configured to perform the method in the second aspect or any possible implementation of the second aspect. Optionally, the communications apparatus may include a module configured to perform the method in the second aspect or any possible implementation of the second aspect.

According to a fifth aspect, a communications apparatus is provided. The communications apparatus includes a memory and a processor. The memory is configured to store an instruction, and the processor is configured to execute the instruction stored in the memory. In addition, the execution of the instruction stored in the memory enables the processor to perform the method in the first aspect or any possible implementation of the first aspect.

According to a sixth aspect, a communications apparatus is provided. The communications apparatus includes a memory and a processor. The memory is configured to store an instruction, and the processor is configured to execute the instruction stored in the memory. In addition, the execution of the instruction stored in the memory enables the processor to perform the method in the second aspect or any possible implementation of the second aspect.

According to a seventh aspect, a chip is provided. The chip includes a processing module and a communications interface. The processing module is configured to control the communications interface to communicate with the outside, and the processing module is further configured to implement the method in the first aspect or any possible implementation of the first aspect.

According to an eighth aspect, a chip is provided. The chip includes a processing module and a communications interface. The processing module is configured to control the communications interface to communicate with the outside, and the processing module is further configured to implement the method in the second aspect or any possible implementation of the second aspect.

According to a ninth aspect, a computer readable storage medium is provided. A computer program is stored in the computer readable storage medium When the computer program is executed by a computer, the computer is enabled to implement the method in the first aspect or any possible implementation of the first aspect.

According to a tenth aspect, a computer readable storage medium is provided. A computer program is stored in the computer readable storage medium When the computer program is executed by a computer, the computer is enabled to implement the method in the second aspect or any possible implementation of the second aspect.

According to an eleventh aspect, a computer program product including an instruction is provided. When the instruction is executed by a computer, the computer is enabled to implement the method in the first aspect or any possible implementation of the first aspect.

According to a twelfth aspect, a computer program product including an instruction is provided. When the instruction is executed by a computer, the computer is enabled to implement the method in the second aspect or any possible implementation of the second aspect.

### BRIEF DESCRIPTION OF DRAWINGS

FIG. 1 is a schematic diagram of an application scenario according to an embodiment of this application;
FIG. 2 is a schematic flowchart of beam failure recovery;
FIG. 3 is a schematic flowchart of a method for determining an uplink resource according to an embodiment of this application;
FIG. 4A, FIG. 4B and FIG. 4C are another schematic flowchart of a method for determining an uplink resource according to an embodiment of this application;
FIG. 5A, FIG. 5B and FIG. 5C are still another schematic flowchart of a method for determining an uplink resource according to an embodiment of this application;
FIG. 6 is a schematic flowchart of a method for determining a downlink resource according to another embodiment of this application;
FIG. 7 is a schematic diagram of an association relationship between a resource on an uplink carrier and a resource on a downlink carrier;
FIG. 8 is a schematic block diagram of a communications apparatus according to an embodiment of this application;
FIG. 9 is another schematic block diagram of a communications apparatus according to an embodiment of this application; and
FIG. 10 is still another schematic block diagram of a communications apparatus according to an embodiment of this application.

### DESCRIPTION OF EMBODIMENTS

The following describes technical solutions of this application with reference to the accompanying drawings.

The technical solutions in the embodiments of this application may be applied to various communications systems, for example, a fifth generation (5th generation, 5G) system, a new radio (new radio, NR) system, a machine to machine (machine to machine, M2M) system, or another future evolved communications system This is not limited in this embodiment of this application.

A terminal device in the embodiments of this application may be referred to as user equipment (user equipment, UE), an access terminal, a subscriber unit, a subscriber station, a mobile station, a mobile console, a remote station, a remote terminal, a mobile device, a user terminal, a terminal, a wireless communications device, a user agent, a user apparatus, or the like. The terminal device may be further a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future evolved public land mobile network (public land mobile network, PLMN), or the like. This is not limited in the embodiments of this application.

A network device in the embodiments of this application may be a device configured to communicate with the terminal device, or any device having a wireless receiving/sending function or a chip disposed in the device. The network device may be a base station. The base station may be configured to communicate with one or more terminal devices, or may be configured to communicate with one or more base stations (for example, a macro base station and a micro base station) that have some functions of the terminal device. The network device may be a base station in a 5G system, an NR system, an M2M system, or another future evolved communications system In addition, the network device may alternatively be an access point (access point, AP), a transmission node (transport point, TRP), a central unit (central unit, CU), or another network entity, and may include some or all of functions of the foregoing network entity. This is not limited in the embodiments of this application.

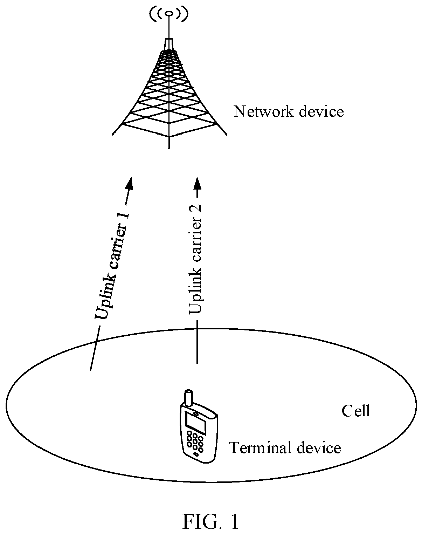

The solutions provided in the embodiments of this application may be applied to a scenario in which the terminal device has a plurality of uplink carriers. As shown in FIG. 1, the terminal device may communicate with the network device by using an uplink carrier 1 and an uplink carrier 2. It should be understood that FIG. 1 is merely an example instead of a limitation. For example, the terminal device may have more than two uplink carriers.

There may be a plurality of scenarios in which the terminal device has the plurality of uplink carriers.

Scenario 1: a cell supporting a configuration of a supplementary uplink carrier (supplementary uplink carrier, SUL carrier).

A carrier frequency band that can be used for uplink transmission in an operating frequency band supported in the NR system may be referred to as an NR uplink carrier (NR uplink carrier, NUL carrier) (hereinafter may be referred to as an NUL carrier). When a high-frequency cell is deployed, due to relatively low transmit power of the terminal device and a relatively high running frequency band of the cell, the terminal device in a cell-edge area may receive a signal of the network device, but the network device may not receive a signal of the terminal device. For this problem, a supplementary uplink carrier (supplementary uplink carrier, SUL) (hereinafter referred to as an SUL carrier) is introduced into the NR system to assist the terminal device in performing the uplink transmission. In other words, in the cell supporting the configuration of the SUL carrier, there are two uplink carriers, that is, the NUL carrier and the SUL carrier that can be used by the terminal to perform the uplink transmission.

A frequency of the NUL carrier is higher than a frequency of the SUL carrier. The NUL carrier may be a high-frequency carrier, such as an FR1 frequency band or an FR2 frequency band in the 3GPP standard. The SUL carrier may be a low-frequency carrier, such as a long term evolution (long term evolution, LTE) frequency band.

For example, Table 1 shows frequency bands of the SUL carrier (frequency bands n80 to n86 shown in Table 1), and Table 2 shows frequency bands n257 to n261 of the NUL carrier.

**Table 1**

| NR operating frequency band (NR operating band) | Uplink operating frequency band (uplink (UL) operating band) F_{UL_low} - F_{UL_high} | Downlink operating frequency band (downlink (DL) operating band) | Duplex mode (duplex mode) |
|---|---|---|---|
| | | F_{DL_low} - F_{DL_high} | |
| n1 | 1920 MHz - 1980 MHz | 2110 MHz-2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz - 716 MHz | 729 MHz - 746 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz - 748 MHz | 758 MHz - 803 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n51 | 1427 MHz - 1432 MHz | 1427 MHz - 1432 MHz | TDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n75 | N/A | 1432 MHz- 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |

**Table 2**

| NR operating frequency band (NR operating band) | Uplink and downlink operating frequency bands (uplink (UL) and downlink (DL) operating band) | Duplex mode (duplex mode) |
|---|---|---|
| | F_{UL_low} - F_{UL_high} | |
| | F_{DL_low} - F_{DL_high} | |
| n257 | 26500 MHz - 29500 MHz | TDD |
| n258 | 24250 MHz - 27500 MHz | TDD |
| n260 | 37000 MHz - 40000 MHz | TDD |
| n261 | 27500 MHz - 28350 MHz | TDD |

It should be noted that "high-frequency" and "low-frequency" mentioned in this specification are relative concepts. Meanings of the two concepts are not strictly limited.

For example, the low-frequency carrier may indicate a carrier operating below 6 GHz, and the high-frequency carrier may indicate a carrier operating above 6 GHz.

Scenario 2: a carrier aggregation scenario. The terminal device may perform the uplink transmission by using an uplink carrier of a primary cell and an uplink carrier of a secondary cell.

The primary cell may support a configuration of an SUL, that is, the primary cell has an NUL carrier and an SUL carrier. Alternatively, the secondary cell may support a configuration of an SUL, that is, the secondary cell has an NUL carrier and an SUL carrier. In other words, the plurality of uplink carriers of the terminal device may include the NUL carrier and the SUL carrier of the primary cell, and the uplink carriers of the secondary cell (for example, the NUL carrier and the SUL carrier of the secondary cell).

The primary cell may be a primary cell (primary cell, PCell) or a primary secondary cell (primary secondary cell, PSCell). The secondary cell may be denoted as an SCell (secondary cell).

An uplink resource used by the terminal device to perform the uplink transmission is configured on the plurality of uplink carriers.

For example, when the terminal device needs to report a beam failure recovery request (beam failure recovery request, BFRQ) message to the network device, an uplink resource used to send the BFRQ message, for example, a random access channel (random access channel, RACH) resource is configured on the plurality of uplink carriers.

For another example, when the terminal device needs to send an uplink scheduling request (scheduling request, SR) message to the network device, a resource used for the uplink scheduling request is configured on the plurality of uplink carriers.

For another example, when the terminal device has uplink data to be reported to the network device, an uplink resource used to transmit the uplink data is configured on the plurality of uplink carriers.

Other uplink resources such as a physical uplink control channel (physical uplink control channel, PUCCH) may be further configured on the plurality of uplink carriers.

This application provides a solution of determining a target uplink resource used for uplink transmission in resources on the plurality of uplink carriers when the terminal device has the plurality of uplink carriers.

When the terminal device needs to send the uplink scheduling request message to the network device, the solution of this application may be used, to determine, in the plurality of uplink carriers, the target uplink resource used to transmit the uplink scheduling request message.

When the terminal device needs to send the BFRQ message to the network device, the solution of this application may be used, to determine, in the plurality of uplink carriers, the target uplink resource used to transmit the beam failure recovery request.

When the terminal device has uplink data, the solution of this application may be used, to determine, in the plurality of uplink carriers, the target uplink resource used to transmit the uplink data.

For ease of understanding and description, the following is described by using an example in which the solution provided in this application is used by the terminal device to send the BFRQ message to the network device. However, the embodiments of this application are not limited thereto.

In the following embodiments, if the beam failure recovery request (BFRQ) message is replaced with an uplink scheduling request message, and the beam failure recovery (BFR) is replaced with uplink scheduling, a target uplink resource used to transmit the uplink scheduling request message may be determined in the plurality of uplink carriers.

In the following embodiments, if the beam failure recovery request (BFRQ) message is replaced with uplink data, and the beam failure recovery (BFR) is replaced with uplink data transmission, a target uplink resource used to transmit the uplink data may be determined in the plurality of uplink carriers.

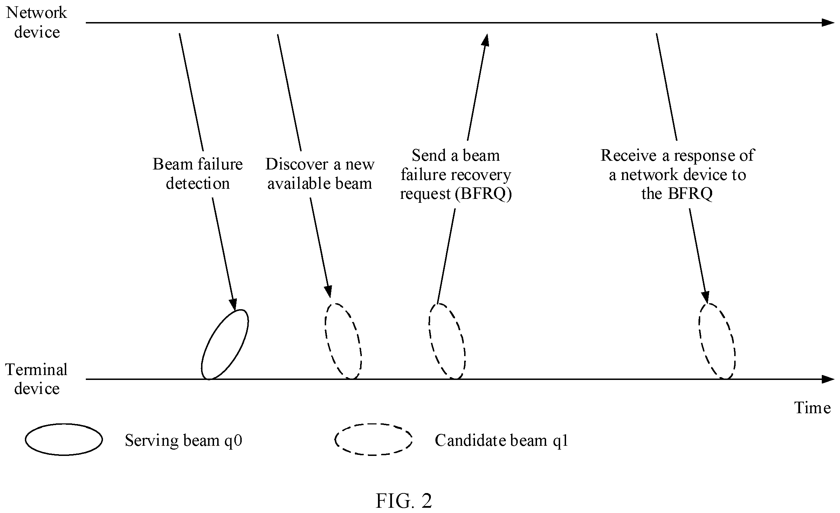

To better understand the embodiments of this application, the following schematically describes a concept related to beam failure recovery with reference to FIG. 2.

As shown in FIG. 2, a beam failure recovery procedure includes the following four parts.

### 1. Beam failure detection

A terminal device performs beam failure detection based on a beam failure detection reference signal (beam failure detection reference signal, BFD RS), that is, a serving beam q0 shown in FIG. 2. When the terminal device detects that quality of the BFD RS is lower than a threshold, the terminal device determines that a beam failure occurs.

### 2. Discovery on a new available beam

The terminal device selects, from a candidate beam (candidate beam) set, candidate beams whose beam quality is higher than a threshold; and selects one candidate beam from the selected candidate beams as a new available beam (which may be denoted as q_new).

The candidate beam set may be preconfigured by a network device for the terminal device.

### 3. Sending of a beam failure recovery request (beam failure recovery request, BFRQ) message

The terminal device sends, by using the new available beam, the BFRQ message to the network device on a physical random access channel (physical random access channel, PRACH) resource associated with the new available beam (q_new).

A PRACH resource associated with each candidate beam in the candidate beam set (including the new available beam) may be preconfigured by the network device for the terminal device.

### 4. Receiving of a response from the network device to the BFRQ message

For example, from a fourth slot (slot) after the terminal device sends the BFRQ message, the terminal device monitors a dedicated control channel resource set (control resource set, CORESET) and a search space (search space) corresponding to the dedicated control channel resource set by using the new available beam (q_new), to obtain the response from the network device to the BFRQ message. For example, the response is a downlink control channel (physical downlink control channel, PDCCH).

It should be understood that the foregoing description with reference to FIG. 2 is merely an example instead of a limitation.

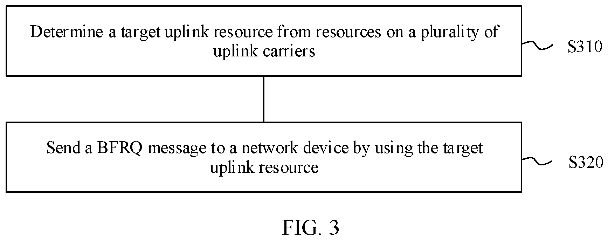

FIG. 3 is a schematic flowchart of a method for determining an uplink resource according to an embodiment of this application. The method may be implemented by a terminal device, or may be implemented by a chip that can be used in a terminal device. The following is described by using an example in which an execution body is the terminal device. As shown in FIG. 3, the method includes the following steps.

S310. The terminal device determines a target uplink resource in resources on a plurality of uplink carriers.

A resource used for beam failure recovery (BFR) in a current cell, that is, a resource used to send a beam failure recovery request (BFRQ) message is configured on the plurality of uplink carriers. The current cell indicates a cell in which a beam failure occurs. The target uplink resource is a resource used for BFR on one of the plurality of uplink carriers.

The resource used for the BFR on the plurality of uplink carriers may be preconfigured by a network device. For example, the network device may preconfigure, for the terminal device by using radio resource control (radio resource control, RRC) signaling, the resource used for the BFR on the plurality of uplink carriers. The network device may further preconfigure, by using other downlink signaling, the resource used for the BFR on the plurality of carriers. This is not limited in this application.

The uplink resource used for the BFR may be a random access (random access channel, RACH) resource.

S320. The terminal device sends a BFRQ message to the network device by using the target uplink resource.

It is assumed that the target uplink resource is a resource on an uplink beam X. In S320, the terminal device sends the BFRQ message to the network device on the target uplink resource by using the uplink beam X.

In this embodiment of this application, when there are a plurality of uplink carriers used for the beam failure recovery, the target uplink resource used to send the beam failure recovery request message is determined to improve efficiency of the beam failure recovery.

The plurality of uplink carriers may be all low-frequency carriers, or may be all high-frequency carriers; or some uplink carriers of the plurality of uplink carriers may be high-frequency carriers, and the other uplink carriers of the plurality of uplink carriers may be low-frequency carriers. Herein, "high-frequency" and "low-frequency" mentioned in this specification are relative concepts. Meanings of the two concepts are not strictly limited. For example, the low-frequency carrier may indicate a carrier operating below 6 GHz, and the high-frequency carrier may indicate a carrier operating above 6 GHz. For another example, in a future evolved technology, the high-frequency carrier and the low-frequency carrier may have new definitions.

In a scenario in which the current cell includes a primary uplink carrier and a supplementary uplink carrier, the plurality of uplink carriers include the primary uplink carrier and the supplementary uplink carrier. The primary uplink carrier may be an uplink carrier mainly used in the current cell, and the supplementary uplink carrier may be used as a supplement to the primary uplink carrier. For example, the supplementary uplink carrier is used when a transmission failure occurs on the primary uplink carrier.

The primary uplink carrier and the supplementary uplink carrier may be both high-frequency carriers, or both low-frequency carriers. Alternatively, the primary uplink carrier is a high-frequency carrier, and the supplementary uplink carrier is a low-frequency carrier. For example, in a high-frequency cell, the primary uplink carrier is a high-frequency carrier, and the supplementary uplink carrier is a low-frequency carrier.

It should be understood that the primary uplink carrier and the supplementary uplink carrier are merely used for differentiation instead of a limitation. For example, a plurality of different uplink carriers in a same cell may also be differentiated by using other names. This is not limited in this application.

For example, the scenario in which the current cell includes the primary uplink carrier and the supplementary uplink carrier may be the SUL scenario described above. Herein, the NUL carrier corresponds to the primary uplink carrier, and the SUL carrier corresponds to the supplementary uplink carrier.

For ease of description and understanding, the following is described by using an example in which the primary uplink carrier is an NUL carrier and the supplementary downlink carrier is an SUL carrier.

In a carrier aggregation scenario, the current cell is a primary cell. When it is allowed to use an uplink carrier of a secondary cell for BFR in the primary cell, the plurality of uplink carriers may include an uplink carrier of the primary cell and an uplink carrier of the secondary cell. If the primary cell supports an SUL technology, the plurality of uplink carriers may include an NUL carrier and an SUL carrier of the primary cell, and an uplink carrier of the secondary cell. If the secondary cell also supports the SUL technology, the plurality of uplink carriers may include an NUL carrier and an SUL carrier of the primary cell, and an NUL carrier and an SUL carrier of the secondary cell.

A contention-free resource and/or a contention-based resource may be configured on the plurality of uplink carriers. A contention-free resource used forBFR may be a contention-free random access resource (contention-free RACH resource), and a contention-based resource used for BFR may be a contention-based random access resource (contention-based RACH resource).

Optionally, an uplink scheduling (RS) resource, a PUCCH resource, or another uplink resource may be further configured on the plurality of uplink carriers. Another contention-free resource other than the contention-free random access resource and/or another contention-based resource other than the contention-based access resource may be further configured on the plurality of uplink carriers.

The following embodiment is described by using an example in which the contention-free resource is a contention-free random access resource and the contention-based resource is a contention-based random access resource.

In this application, the target uplink resource used to send the BFRQ message may be determined in the resources on the plurality of uplink carriers in a plurality of implementations.

For example, a contention-free random access resource on the plurality of uplink carriers may be preferentially selected as the target uplink resource. For another example, a resource (preferentially, a contention-free random access resource) on an NUL carrier in the plurality of uplink carriers is preferentially selected as the target uplink resource. For another example, a resource (preferentially, a contention-free random access resource) on an SUL carrier in the plurality of uplink carriers is preferentially selected as the target uplink resource. For another example, a target uplink carrier is selected from the plurality of uplink carriers based on beam attributes associated with the resources on the plurality of uplink carriers, and the target uplink resource is determined in a resource (preferentially, a contention-free random access resource) on the target uplink carrier. For another example, in a carrier aggregation scenario, an uplink carrier of a cell (a primary cell or a secondary cell) is selected from the plurality of uplink carriers based on candidate beam quality of the primary cell and the secondary cell, and the target uplink resource is selected from a resource (preferentially, a contention-free random access resource) on the selected uplink carrier of the cell.

It should be noted that each implementation of determining, in the resources on the plurality of uplink carriers, the target uplink resource used to send the BFRQ message may be used independently or may be used in combination based on internal logic.

The following describes a plurality of implementations of determining the target uplink resource in the resources on the plurality of uplink carriers.

A solution of preferentially selecting the contention-free random access resource as the target uplink resource is used.

In a process of selecting the target uplink resource from the plurality of uplink carriers, whether the plurality of uplink carriers have an available contention-free random access resource is first determined. If the plurality of uplink carriers have the available contention-free random access resource, a contention-free random access resource on an uplink carrier is used as the target uplink resource. If the plurality of uplink carriers do not have the available contention-free random access resource, a contention-based random access resource on an uplink carrier is used as the target uplink resource.

For example, when at least one of the plurality of uplink carriers has a contention-free random access resource, a contention-free random access resource on one uplink carrier (denoted as an uplink carrier Y) of the at least one uplink carrier is determined as the target uplink resource.

In a scenario in which the current cell supports an SUL technology, the uplink carrier Y may be an NUL carrier, or may be an SUL carrier.

In a carrier aggregation scenario, the uplink carrier Y may be an uplink carrier of the primary cell, or may be an uplink carrier of the secondary cell.

It should be understood that no collision (collision) occurs and no collision needs to be resolved when the terminal device uses a contention-free random access resource to initiate random access. Therefore, in comparison with a case in which the terminal device uses the contention-based random access resource to initiate the random access, the terminal device has a shorter access delay and a higher access success rate when the terminal device uses the contention-free random access resource to initiate the random access. In this way, in this application, the contention-free random access resource is preferentially selected from the plurality of uplink carriers to send the beam failure recovery request message, thereby improving efficiency and a success rate of the beam failure recovery.

Optionally, when at least one of the plurality of uplink carriers has a contention-free random access resource, an uplink carrier may be randomly selected from the at least one uplink carrier, and a contention-free random access resource on the uplink carrier is used as the target uplink resource.

Optionally, when at least one of the plurality of uplink carriers has a contention-free random access resource, an uplink carrier may be preferentially selected from the at least one uplink carrier, and a contention-free random access resource on the uplink carrier is used as the target uplink resource.

For example, the plurality of uplink carriers include an NUL carrier and an SUL carrier. A contention-free random access resource on the NUL carrier may be preferentially selected from the at least one uplink carrier as the target uplink resource, or a contention-free random access resource on the SUL carrier may be preferentially selected from the at least one uplink carrier as the target uplink resource.

The following separately describes a solution of preferentially selecting a contention-free random resource on the NUL carrier and a solution of preferentially selecting a contention-free random access resource on the SUL carrier.

The solution of preferentially selecting the contention-free random resource on the NUL carrier as the target uplink resource is used.

In a process of selecting the target uplink resource from the plurality of uplink carriers, whether the NUL carrier has an available contention-free random access resource is first determined. If the NUL carrier has the available contention-free random access resource, the contention-free random access resource on the NUL carrier is used as the target uplink resource, that is, the contention-free random access resource on the NUL carrier is used to send the BFRQ message.

It should be understood that, because the NUL carrier may operate on a high frequency band, a greater subcarrier spacing defined in a protocol may be used for transmission. In this case, each corresponding symbol time (an absolute time) is shorter. Therefore, in comparison with the SUL carrier, random access resources on the NUL carrier may be configured in a denser manner. In this way, the terminal device can have more opportunities to use resources in a relatively short time, thereby effectively reducing a transmission delay.

Therefore, in this application, when the terminal device has the plurality of uplink carriers, the contention-free random access resource on the NUL carrier in the plurality of uplink carriers is preferentially selected to send the BFRQ message, thereby reducing a BFR delay and effectively improving BFR efficiency.

In a process of preferentially selecting the contention-free random resource on the NUL carrier as the target uplink resource, if the NUL carrier does not have the available contention-free random access resource, or the BFRQ message fails to be sent by using the contention-free random access resource on the NUL carrier, whether another carrier has a contention-free random access resource is determined. If the another carrier has the contention-free random access resource, the contention-free random access resource is used to send the BFRQ message. If the another carrier does not have the contention-free random access resource, a contention-based random access resource on the plurality of uplink carriers is used to send the BFRQ message.

For example, when the NUL carrier does not have the available contention-free random access resource, or the BFRQ message fails to be sent by using the contention-free random access resource on the NUL carrier, whether the SUL carrier has an available contention-free random access resource is determined. If the SUL carrier has the available contention-free random access resource, the contention-free random access resource on the SUL carrier is used to send the BFRQ message. If neither the NUL carrier nor the SUL carrier has an available contention-free random access resource, or the BFRQ message fails to be sent by using the contention-free random access resource, it may be considered to send the BFRQ message by using a contention-based random access resource on the plurality of uplink carriers.

Optionally, in some embodiments, a beam failure recovery timer (beam failure recovery timer) is configured on the NUL carrier. If the beam failure recovery timer expires, a contention-free random access resource on the NUL carrier is unavailable.

In the foregoing embodiment, that the NUL carrier does not have the available contention-free random access resource indicates that no contention-free random access resource is configured on the NUL carrier or the beam failure recovery timer on the NUL carrier expires.

Optionally, in some embodiments, a beam failure recovery timer (beam failure recovery timer) is configured on the SUL carrier. If the beam failure recovery timer expires, a contention-free random access resource on the SUL carrier is unavailable.

In the foregoing embodiment, that the SUL carrier does not have the available contention-free random access resource indicates that no contention-free random access resource is configured on the SUL carrier or the beam failure recovery timer on the NUL carrier expires.

The beam failure recovery timer on the NUL carrier and the beam failure recovery timer on the SUL carrier may be configured by the network device.

For example, the network device may define the beam failure recovery timer on the NUL carrier and the beam failure recovery timer on the SUL carrier by using the following configuration information (// is followed by an annotation). The following configuration information may be carried in RRC signaling or other downlink signaling.

beamFailureRecoveryTimer-CFRA-NUL // Configure the beam failure recovery timer for the NUL carrier.

Timer for beam failure recovery timer on NUL. Upon expiration of the timer the UE does not use CFRA on NUL for BFR. // Configure a function of the beam failure recovery timer on the NUL carrier.

beamFailureRecoveryTimer-CFRA-SUL // Configure the beam failure recovery timer for the SUL carrier.

Timer for beam failure recovery timer on SUL. Upon expiration of the timer the UE does not use CFRA on SUL for BFR. // Configure a function of the beam failure recovery timer on the SUL carrier.

For another example, the network device may define a use method of the beam failure recovery timer on the NUL carrier and a use method of the beam failure recovery timer on the SUL carrier by using the following configuration information (// is followed by an annotation). The following configuration information may be carried in RRC signaling or other downlink signaling.

XXXX condition, the MAC entity shall:
1> if the contention-free Random Access Preamble for beam failure recovery request was configured on NUL:
2> start beamFailureRecoveryTimer-CFRA-NUL timer and start RA procedure on NUL;
3> Till expiration of the timer, BFR is not successfully completed; // If a contention-free random access resource is configured on the NUL carrier, the beam failure recovery timer of the NUL carrier starts timing when the contention-free random access resource on the NUL carrier starts to be used for random access. When the timer expires, if the random access still does not succeed, the BFRQ fails to be sent by using the contention-free random access resource on the NUL carrier.
4> if the contention-free Random Access Preamble for beam failure recovery request was configured on SUL:
5> start beamFailureRecoveryTimer-CFRA-SUL timer. // If a contention-free random access resource is configured on the SUL carrier, the beam failure recovery timer on the SUL carrier starts timing when the contention-free random access resource on the SUL carrier starts to be used for random access.

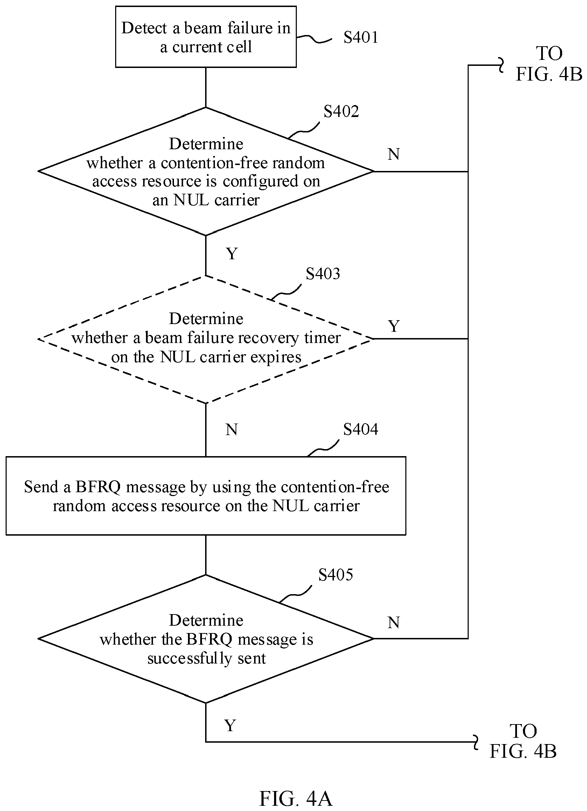

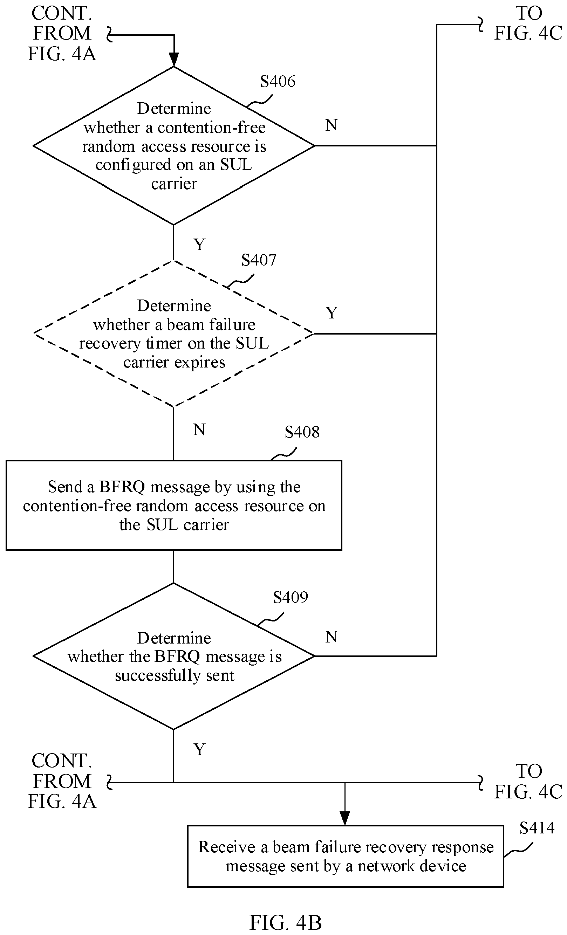

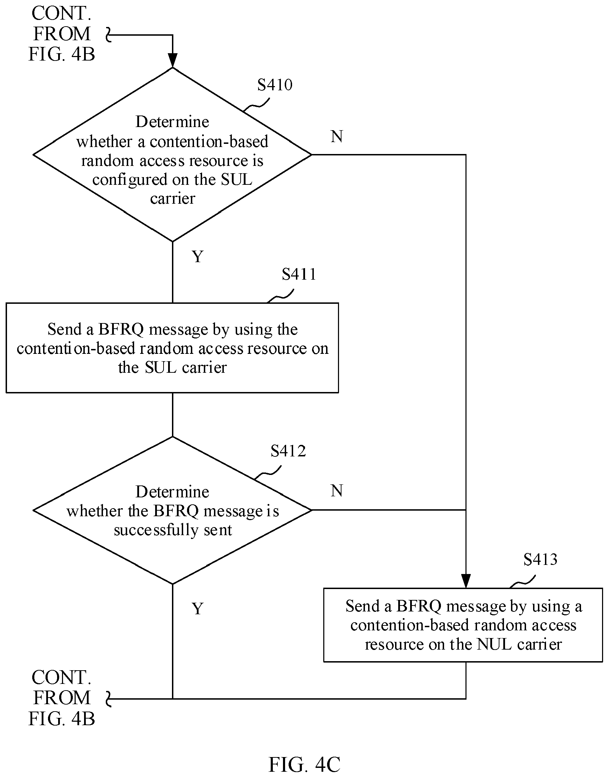

In an example instead of a limitation, the following describes a specific procedure in which the terminal device preferentially selects the contention-free random access resource on the NUL carrier as the target uplink resource with reference to FIG. 4A, FIG. 4B and FIG. 4C. As shown in FIG. 4A, FIG. 4B and FIG. 4C, the method includes the following steps.

S401. Detect a beam failure in a current cell. The current cell has an NUL carrier and an SUL carrier.

S402. Determine whether a contention-free random access resource is configured on the NUL carrier; and if the contention-free random access resource is configured on the NUL carrier, go to S403; or if the contention-free random access resource is not configured on the NUL carrier, go to S406.

S403. Determine whether a beam failure recovery timer on the NUL carrier expires; and if the beam failure recovery timer on the NUL carrier expires, go to S406; or if the beam failure recovery timer on the NUL carrier does not expire, go to S404.

S404. Send a BFRQ message by using the contention-free random access resource on the NUL carrier.

S405. Detect whether the BFRQ message is successfully sent by using the contention-free random access resource on the NUL carrier; and if the BFRQ message is successfully sent by using the contention-free random access resource on the NUL carrier, go to S414; or if the BFRQ message is not successfully sent by using the contention-free random access resource on the NUL carrier, go to S406.

S406. Determine whether a contention-free random access resource is configured on the SUL carrier; and if the contention-free random access resource is configured on the SUL carrier, go to S407; or if the contention-free random access resource is not configured on the SUL carrier, go to S410.

S407. Determine whether a beam failure recovery timer on the SUL carrier expires; and if the beam failure recovery timer on the SUL carrier expires, go to S410; or if the beam failure recovery timer on the SUL carrier does not expire, go to S408.

S408. Send a BFRQ message by using the contention-free random access resource on the SUL carrier.

S409. Detect whether the BFRQ message is successfully sent by using the contention-free random access resource on the SUL carrier; and if the BFRQ message is successfully sent by using the contention-free random access resource on the SUL carrier, go to S414; or if the BFRQ message is not successfully sent by using the contention-free random access resource on the SUL carrier, go to S410.

S410. Determine whether a contention-based random access resource is configured on the SUL carrier; and if the contention-based random access resource is configured on the SUL carrier, go to S411; or if the contention-based random access resource is not configured on the SUL carrier, go to S413.

S411. Send a BFRQ message by using the contention-based random access resource on the SUL carrier.

S412. Detect whether the BFRQ message is successfully sent by using the contention-based random access resource on the SUL carrier; and if the BFRQ message is successfully sent by using the contention-based random access resource on the SUL carrier, go to S414; or if the BFRQ message is not successfully sent by using the contention-based random access resource on the SUL carrier, go to S413.

S413. Send a BFRQ message by using a contention-based random access resource on the NUL carrier.

S414. Receive a beam failure recovery response message sent by a network device.

Step S403 and step S407 are optional. To be specific, step S404 may be directly performed after step S402 is performed, and step S408 may be directly performed after step S406 is performed.

Optionally, the terminal device may select a target uplink resource (that is, an uplink resource used to send a BFRQ) from resources on a plurality of uplink carriers based on a preset resource use priority. The resource use priority indicates a use priority sequence of the resources on the plurality of uplink carriers.

For example, the resource use priority is the contention-free random access resource on the NUL carrier > the contention-free random access resource on the SUL carrier > the contention-based random access resource on the SUL carrier > the contention-based random access resource on the NUL carrier. The terminal device may perform the operation procedure shown in FIG. 4A, FIG. 4B and FIG. 4C to determine the target uplink resource in the plurality of uplink carriers based on the resource use priority.

Optionally, the resource use priority may be specified in a protocol.

Optionally, the resource use priority may be preconfigured by the network device. For example, the network device may configure the resource use priority for the terminal device by using RRC signaling or other downlink signaling.

It should be understood that, because the NUL carrier may operate on a high frequency band, a greater subcarrier spacing defined in a protocol may be used for transmission. In this case, each corresponding symbol time (an absolute time) is shorter. Therefore, in comparison with the SUL carrier, random access resources on the NUL carrier may be configured in a denser manner. In this way, the terminal device has more opportunities to use resources in a relatively short time, thereby effectively reducing a transmission delay.

Therefore, in this application, when the terminal device has the plurality of uplink carriers, the contention-free random access resource on the NUL carrier in the plurality of uplink carriers is preferentially selected to send the BFRQ message, thereby reducing a BFR delay and effectively improving BFR efficiency.

In addition, the NUL carrier has a relatively large total quantity of contention-free random access resources. The resources may be contention-free random access resources associated with a downlink narrow beam (for example, a CSI-RS) configuration. In this case, after completing BFR, the terminal device may not perform beam sweeping and beam training again, so that the terminal device can have a shorter data transmission recovery delay. Therefore, the contention-free random access resource on the NUL carrier is preferentially selected, thereby reducing a BFR delay and improving BFR efficiency.

The solution of preferentially selecting the contention-free random access resource on the SUL carrier the target uplink resource is used.

In a process of selecting the target uplink resource from the plurality of uplink carriers, whether the SUL carrier has an available contention-free random access resource is first determined. If the SUL carrier has the available contention-free random access resource, the contention-free random access resource on the SUL carrier is used as the target uplink resource, that is, the contention-free random access resource on the SUL carrier is used to send the BFRQ message.

In other words, a contention-free random access resource on an uplink carrier with a relatively low frequency band/center frequency in the plurality of uplink carriers is preferentially used to send the BFRQ message. For example, if a network configures the plurality of uplink carriers for the terminal device, when one uplink carrier operates at 28 GHz and another uplink carrier operates at 39 GHz, the terminal device may preferentially select a resource on the uplink carrier operating at 28 GHz to perform the BFR.

It should be understood that the terminal device has limited transmit power. When the terminal device sends signals by using same power, a path loss of a low-frequency signal is smaller than that of a high-frequency signal in free space. The SUL carrier operates on a relatively low frequency band relative to the NUL carrier, and has better uplink coverage than the NUL carrier. Therefore, the contention-free random access resource on the SUL carrier is preferentially used to send the BFRQ message, to improve transmission reliability of the BFRQ message, thereby improving success probability of the BFR.

For example, in a beam failure scenario in a high-frequency system, the BFRQ message may be sent by preferentially using the contention-free random access resource on the SUL carrier.

It should be noted that the solution that is proposed in this application and in which the contention-free random access resource on the plurality of uplink carriers is selected as the target uplink resource does not absolutely limit use priorities of all contention-free random access resources on the plurality of uplink carriers to be higher than those of all contention-based random access resources on the plurality of uplink carriers. For example, in the solution of preferentially selecting the contention-free random resource on the SUL carrier as the target uplink resource, a use priority of the contention-free random access resource on the NUL carrier may be lower than that of the contention-based random access resource on the SUL carrier.

For example, in a process of preferentially selecting the contention-free random resource on the SUL carrier as the target uplink resource, if the SUL carrier does not have an available contention-free random access resource, or the BFRQ message fails to be sent by using the contention-free random access resource on the SUL carrier, the contention-based random access resource on the SUL carrier or the contention-free random access resource on the NUL carrier is preferentially used to send the BFRQ message.

Optionally, in the solution of preferentially selecting the contention-free random resource on the SUL carrier as the target uplink resource, the beam failure recovery timer may also be configured on the SUL carrier. If the beam failure recovery timer expires, the contention-free random access resource on the SUL carrier is unavailable. The beam failure recovery timer may also be configured on the NUL carrier. If the beam failure recovery timer expires, the contention-free random access resource on the NUL carrier is unavailable.

In the foregoing embodiment, that the SUL carrier does not have the available contention-free random access resource indicates that no contention-free random access resource is configured on the SUL carrier or the beam failure recovery timer on the NUL carrier expires. In the foregoing embodiment, that the NUL carrier does not have the available contention-free random access resource indicates that no contention-free random access resource is configured on the NUL carrier or the beam failure recovery timer on the NUL carrier expires.

A method for configuring the beam failure recovery timer on the NUL carrier and the beam failure recovery timer on the SUL carrier is described above. For brevity, details are not described herein again.

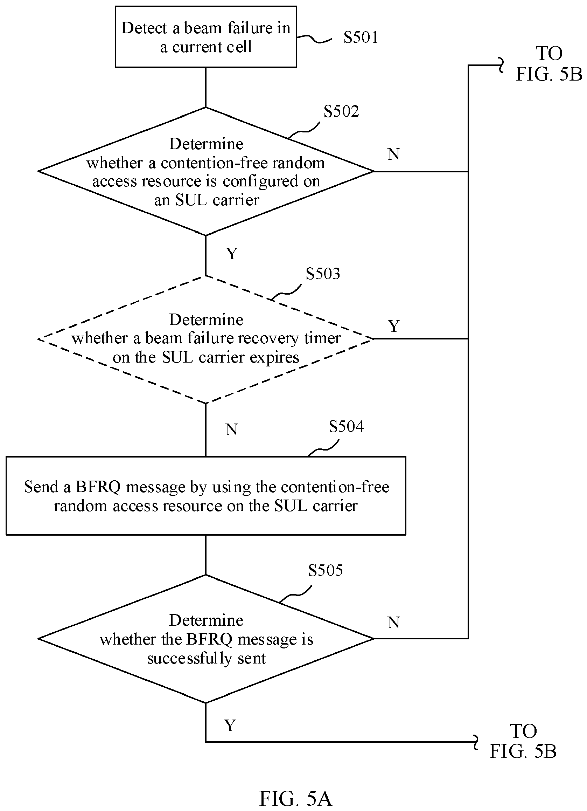

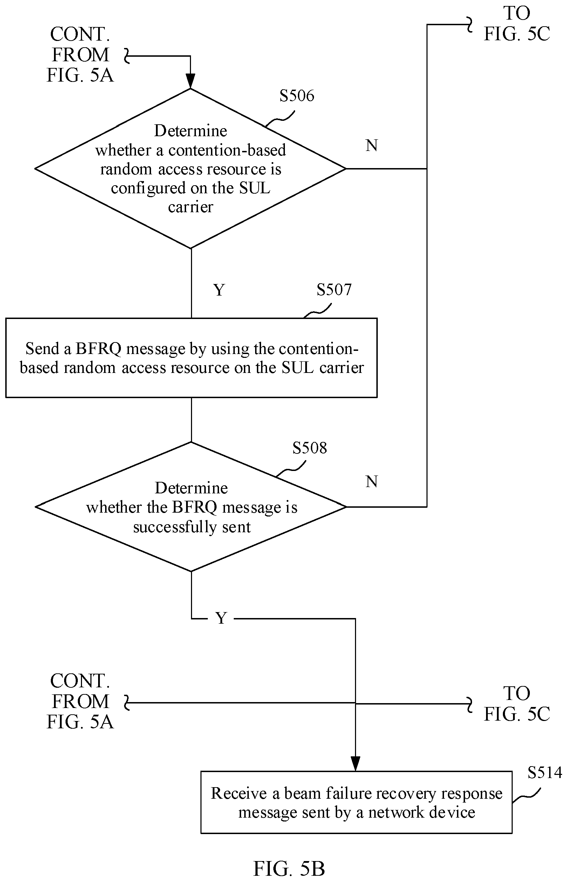

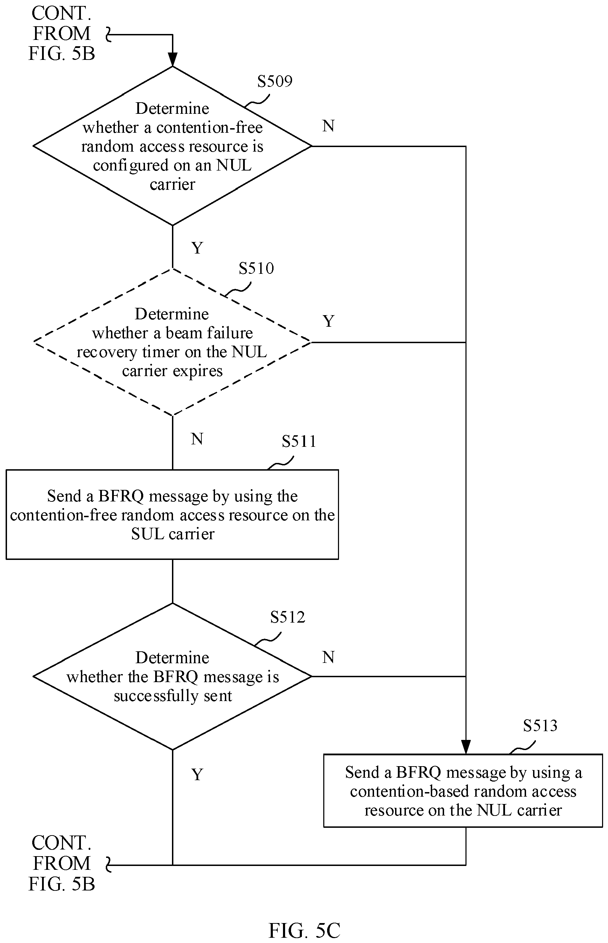

In an example instead of a limitation, the following describes a specific procedure in which the terminal device preferentially selects the contention-free random access resource on the SUL carrier as the target uplink resource with reference to FIG. 5A, FIG. 5B and FIG. 5C. As shown in FIG. 5A, FIG. 5B and FIG. 5C, the method includes the following steps.

S501. Detect a beam failure in a current cell. The current cell has an NUL carrier and an SUL carrier.

S502. Determine whether a contention-free random access resource is configured on the SUL carrier; and if the contention-free random access resource is configured on the SUL carrier, go to S503; or if the contention-free random access resource is not configured on the SUL carrier, go to S506.

S503. Determine whether a beam failure recovery timer on the SUL carrier expires; and if the beam failure recovery timer on the SUL carrier expires, go to S506; or if the beam failure recovery timer on the SUL carrier does not expire, go to S504.

S504. Send a BFRQ message by using the contention-free random access resource on the SUL carrier.

S505. Detect whether the BFRQ message is successfully sent by using the contention-free random access resource on the SUL carrier; and if the BFRQ message is successfully sent by using the contention-free random access resource on the SUL carrier, go to S514; or if the BFRQ message is not successfully sent by using the contention-free random access resource on the SUL carrier, go to S506.

S506. Determine whether a contention-based random access resource is configured on the SUL carrier; and if the contention-based random access resource is configured on the SUL carrier, go to S507; or if the contention-based random access resource is not configured on the SUL carrier, go to S509.

S507. Send a BFRQ message by using the contention-based random access resource on the SUL carrier.

S508. Detect whether the BFRQ message is successfully sent by using the contention-based random access resource on the SUL carrier; and if the BFRQ message is successfully sent by using the contention-based random access resource on the SUL carrier, go to S514; or if the BFRQ message is not successfully sent by using the contention-based random access resource on the SUL carrier, go to S509.

S509. Determine whether a contention-free random access resource is configured on the NUL carrier; and if the contention-free random access resource is configured on the NUL carrier, go to S510; or if the contention-free random access resource is not configured on the NUL carrier, go to S513.

S510. Determine whether a beam failure recovery timer on the NUL carrier expires; and if the beam failure recovery timer on the NUL carrier expires, go to S513; or if the beam failure recovery timer on the NUL carrier does not expire, go to S511.

S511. Send a BFRQ message by using the contention-free random access resource on the NUL carrier.

S512. Detect whether the BFRQ message is successfully sent by using the contention-free random access resource on the NUL carrier; and if the BFRQ message is successfully sent by using the contention-free random access resource on the NUL carrier, go to S514; or if the BFRQ message is not successfully sent by using the contention-free random access resource on the NUL carrier, go to S513.

S513. Send a BFRQ message by using a contention-based random access resource on the NUL carrier.

S514. Receive a beam failure recovery response message sent by a network device.

Step S503 and step S510 are optional. To be specific, step S504 may be directly performed after step S502 is performed, and step S511 may be directly performed after step S509 is performed.

In FIG. 5A, FIG. 5B and FIG. 5C, a use priority of the contention-based random access resource on the SUL carrier is higher than a use priority of the contention-free random access resource on the NUL carrier.

Optionally, a use priority of the contention-free random access resource on the NUL carrier is higher than a use priority of the contention-based random access resource on the SUL carrier. For example, when the SUL carrier does not have an available contention-free random access resource, or the BFRQ message fails to be sent by using the contention-free random access resource on the SUL carrier, the contention-free random access resource on the NUL carrier is preferentially used, and the contention-based random access resource on the SUL carrier is secondly used.

Optionally, the terminal device may select a target uplink resource (that is, an uplink resource used to send a BFRQ) from resources on a plurality of uplink carriers based on a preset resource use priority. The resource use priority indicates a use priority sequence of the resources on the plurality of uplink carriers.

For example, the resource use priority is the contention-free random access resource on the SUL carrier > the contention-based random access resource on the SUL carrier > the contention-free random access resource on the NUL carrier > the contention-based random access resource on the NUL carrier. Alternatively, the resource use priority is the contention-free random access resource on the SUL carrier > the contention-free random access resource on the NUL carrier > the contention-based random access resource on the SUL carrier > the contention-based random access resource on the NUL carrier.

Optionally, the resource use priority may indicate a use priority sequence of a plurality of uplink resources, or may directly indicate a resource type with a highest priority.

Optionally, the resource use priority may be specified in a protocol.

Optionally, the resource use priority may be preconfigured by the network device. For example, the network device may configure the resource use priority for the terminal device by using RRC signaling or other downlink signaling.

In this embodiment of this application, when the terminal device has the plurality of uplink carriers, the contention-free random access resource on the SUL carrier in the plurality of uplink carriers is preferentially selected to send the BFRQ message. It should be understood that the terminal device has limited transmit power. When the terminal device sends signals by using same power, a path loss of a low-frequency signal is smaller than that of a high-frequency signal in free space. The SUL carrier operates on a relatively low frequency band relative to the NUL carrier, and has better uplink coverage than the NUL carrier. Therefore, the contention-free random access resource on the SUL carrier is preferentially used to send the BFRQ message, to improve transmission reliability of the BFRQ message, thereby improving success probability of BFR.

The foregoing describes the solution of preferentially selecting the contention-free random resource on the NUL carrier as the target uplink resource and the solution of preferentially selecting the contention-free random resource on the SUL carrier as the target uplink resource.

Optionally, in some embodiments, when it is detected that quality of a candidate beam of the current cell exceeds a threshold, the contention-free random resource on the NUL carrier is preferentially selected as the target uplink resource; or when it is detected that quality of a candidate beam of the current cell is lower than a threshold, the contention-free random resource on the SUL carrier is preferentially selected as the target uplink resource.

The terminal device may obtain the quality of the candidate beam through measurement.

For example, the quality of the candidate beam may be obtained through measurement at a physical layer, and the candidate beam may correspond to reference signal received power (reference signal receiving power, RSRP) or reference signal received quality (reference signal receiving quality, RSRQ) of the candidate beam.

The threshold used to measure the quality of the candidate beam may be defined in a protocol, or may be configured by the network device.

For example, the network device may configure the threshold by using RRC signaling or other downlink signaling.

Optionally, in a carrier aggregation scenario, if it is also allowed to use an uplink carrier of a secondary cell for the BFR in the current cell, the plurality of uplink carriers further include the uplink carrier of the secondary cell in addition to the NUL carrier and the SUL carrier of the primary cell (that is, the current cell). In this case, the terminal device uses the following manners to determine, in the resources on the plurality of uplink carriers, the target uplink resource used to send the BFRQ message.

Manner (1): Preferentially use a contention-free random access resource on the plurality of uplink carriers. When the plurality of uplink carriers do not have an available contention-free random access resource, or the BFRQ message fails to be sent by using the contention-free random access resource on the plurality of uplink carriers, a contention-based random access resource on the plurality of uplink carriers is used to send the BFRQ message.

For example, the resource use priority is a contention-free random access resource on the NUL carrier of the primary cell > a contention-free random access resource on the SUL carrier of the primary cell > a contention-free random access resource on the uplink carrier of the secondary cell > a contention-based random access resource on the SUL carrier of the primary cell > a contention-based random access resource on the NUL carrier of the primary cell > a contention-based random access resource on the uplink carrier of the secondary cell.

For another example, the resource use priority is a contention-free random access resource on the SUL carrier of the primary cell > a contention-free random access resource on the NUL carrier of the primary cell > a contention-free random access resource on the uplink carrier of the secondary cell > a contention-based random access resource on the SUL carrier of the primary cell > a contention-based random access resource on the NUL carrier of the primary cell > a contention-based random access resource on the uplink carrier of the secondary cell.

Manner (2): Preferentially use a resource on the uplink carrier of the primary cell. When the uplink carrier of the primary cell does not have an available resource used to send the BFRQ message, or the BFRQ message fails to be sent by using the resource on the uplink carrier of the primary cell, a resource (preferentially, a contention-free random access resource) on the uplink carrier of the secondary cell is used to send the BFRQ message.

Any one of the foregoing described solution of preferentially selecting the contention-free random access resource as the target uplink resource, the solution of preferentially selecting the contention-free random resource on the NUL carrier as the target uplink resource, or the solution of preferentially selecting the contention-free random resource on the SUL carrier as the target uplink resource may be used to preferentially use the resource on the uplink carrier of the primary cell.

Optionally, in a carrier aggregation scenario, a resource on the uplink carrier of the primary cell or a resource on the uplink carrier of the secondary cell is selected as the target uplink resource based on quality of a candidate beam of the primary cell and quality of a candidate beam of the secondary cell.

In other words, the quality of the candidate beam of the primary cell is compared with the quality of the candidate beam of the secondary cell, to determine whether to preferentially use the resource on the uplink carrier of the primary cell or preferentially use the resource on the uplink carrier of the secondary cell.

The quality of the candidate beam may be reference signal received power (reference signal receiving power, RSRP) or reference signal received quality (reference signal receiving quality, RSRQ).

Optionally, when a sum of the quality of the candidate beam of the primary cell and a preset offset is greater than or equal to the quality of the candidate beam of the secondary cell, the resource on the uplink carrier of the primary cell is selected as the target uplink resource, that is, the resource on the uplink carrier of the primary cell is preferentially used.

When a sum of the quality of the candidate beam of the primary cell and a preset offset is less than the quality of the candidate beam of the secondary cell, the resource on the uplink carrier of the primary cell is selected as the target uplink resource, that is, the resource on the uplink carrier of the secondary cell is preferentially used.

The preset offset may be preconfigured by the network device. For example, the network device preconfigures the preset offset by using RRC signaling or other downlink signaling.

Alternatively, the preset offset may be specified in a protocol.

Optionally, whether to preferentially use the resource on the uplink carrier of the primary cell or the resource on the uplink carrier of the secondary cell may be further determined in another manner based on the quality of the candidate beam of the primary cell and the quality of the candidate beam of the secondary cell. This is not limited in this application.

It should be understood that, in a carrier aggregation scenario, after it is determined to preferentially use an uplink resource of one of the primary cell and the secondary cell, the target uplink carrier may be determined in a resource of an uplink carrier of the selected cell by using any foregoing provided method for selecting a target uplink resource.

This application further provides a solution of determining the target uplink resource in the plurality of uplink carriers based on beam attributes associated with resources on the uplink carriers.

Optionally, in some embodiments, step 310 includes: selecting a target uplink carrier from the plurality of uplink carriers based on the beam attributes associated with the resources on the plurality of uplink carriers; and determining a resource on the target uplink carrier as the target uplink resource.

Optionally, the plurality of uplink carriers include a first carrier and a second carrier. A resource on the first carrier is associated with a channel state information-reference signal (channel state information-reference signal, CSI-RS), and a resource on the second carrier is associated with a synchronization signal block (synchronization signal block, SSB). The first carrier is selected as the target uplink carrier.

In other words, in the plurality of uplink carriers, a resource use priority of any uplink carrier whose resource is associated with a CSI-RS is higher than a resource use priority of an uplink carrier associated with an SSB.

The first carrier and the second carrier are merely for differentiation instead of a limitation. The first carrier indicates any carrier whose resource is associated with a CSI-RS in the plurality of uplink carriers, and the second carrier indicates any carrier whose resource is associated with an SSB in the plurality of uplink carriers.

For example, the first carrier and the second carrier are respectively an NUL carrier and an SUL carrier of a same cell. For another example, the first carrier and the second carrier are respectively the uplink carrier of the primary cell and the uplink carrier of the secondary cell.

It should be understood that the SSB is usually considered as a wide beam, and the CSI-RS is usually considered as a narrow beam. For example, a plurality of CSI-RSs may be considered to be quasi-co-located (quasi-co-location, QCL) to one SSB. If a narrow beam is recovered for the terminal device after the beam failure recovery, a beamforming gain can be increased, thereby supporting a higher data rate.

Therefore, in this embodiment of this application, a resource on an uplink carrier whose resource is associated with a CSI-RS is preferentially selected from the plurality of uplink carriers to perform the BFR, so that a greater antenna gain (beamforming gain) can be obtained by using the recovered beam, thereby supporting a higher data rate.

Optionally, a solution of preferentially selecting a resource on an uplink carrier whose resource is associated with a CSI-RS to perform the BFR may be applied to a scenario in which two carriers in comparison both have contention-free random access resources or both have contention-based random access resources.

Optionally, a solution of preferentially selecting a resource on an uplink carrier whose resource is associated with a CSI-RS to perform the BFR may be applied to various scenarios in which the terminal device has the plurality of uplink carriers used for the BFR.

Optionally, a solution of preferentially selecting a resource on an uplink carrier whose resource is associated with a CSI-RS to perform the BFR may be further applied to some of the foregoing embodiments.

For example, in a solution of preferentially selecting a contention-free random access resource on the plurality of uplink carriers to perform the BFR, if it is detected that two uplink carriers both have available contention-free random access resources, in this case, if a resource on one uplink carrier is associated with a CSI-RS and a resource on the other uplink carrier is associated with an SSB, the contention-free random access resource on the uplink carrier associated with the CSI-RS is preferentially selected to perform the BFR.

Optionally, the plurality of uplink carriers include a third carrier and a fourth carrier. A quantity of candidate beams associated with a resource on the third carrier is less than or equal to a quantity of candidate beams associated with a resource on the fourth carrier. The third carrier is determined as the target uplink carrier.

In other words, an uplink carrier that is associated with a relatively small quantity of candidate beams is preferentially used to perform the BFR.

The third carrier and the fourth carrier are merely for differentiation instead of a limitation. The third carrier and the fourth carrier indicate any two uplink carriers that are associated with different quantities of candidate beams in the plurality of uplink carriers.

For example, a random access resource on one uplink carrier (which may be denoted as the third carrier) of the plurality of uplink carriers is associated with X candidate beams, and a random access resource on another uplink carrier (which may be denoted as the fourth carrier) is associated with Y candidate beams, where X<Y In this case, the terminal device preferentially performs the BFR on the third carrier associated with the X candidate beams.

For example, X is 2, and Y is 4. If the terminal device performs the BFR by using a random access resource on the third carrier, the network device needs to respond to the beam failure recovery in two beam directions. If the terminal device performs the BFR by using a random access resource on the fourth carrier, the network device needs to respond to the beam recovery in four guard directions. Therefore, in comparison with the case of performing the BFR by using the resource on the fourth carrier, the terminal performs the BFR by using the resource on the third carrier to indicate a relatively small beam failure recovery response beam range to the network device, thereby reducing resource costs of the network device and facilitating subsequent beam management.

Therefore, in this embodiment of this application, a resource on an uplink carrier whose resource is associated with a relatively small quantity of candidate beams is preferentially selected to perform the BFR, thereby reducing resource costs of the network device and facilitating subsequent beam management.

Optionally, a solution of preferentially selecting a resource on an uplink carrier whose resource is associated with a relatively small quantity of candidate beams to perform the BFR may be applied to a scenario in which two carriers in comparison both have contention-free random access resources or both have contention-based random access resources.

Optionally, a solution of preferentially selecting a resource on an uplink carrier whose resource is associated with a relatively small quantity of candidate beams to perform the BFR may be applied to various scenarios in which the terminal device has the plurality of uplink carriers used for the BFR.

Optionally, a solution of preferentially selecting a resource on an uplink carrier whose resource is associated with a relatively small quantity of candidate beams to perform the BFR may be further applied to some of the foregoing embodiments.

For example, in a solution of preferentially selecting a contention-free random access resource on the plurality of uplink carriers to perform the BFR, if it is detected that two uplink carriers both have available contention-free random access resources, in this case, if resources on the two uplink carriers are associated with different quantities of candidate beams, the contention-free random access resource on the uplink carrier associated with a smaller quantity of candidate beams is preferentially selected to perform the BFR.

It can be learned from the foregoing description that, in this embodiment of this application, when there are the plurality of uplink carriers used for the BFR, a plurality of implementations of selecting, from the resources on the plurality of uplink carriers, the target uplink resource used to send the BFRQ message are proposed. For example, the contention-free random access resource on the plurality of uplink carriers may be preferentially selected as the target uplink resource. For another example, a resource (preferentially, a contention-free random access resource) on an NUL carrier in the plurality of uplink carriers may be preferentially selected as the target uplink resource. For another example, a resource (preferentially, a contention-free random access resource) on an SUL carrier in the plurality of uplink carriers may be preferentially selected as the target resource. For another example, a resource on an uplink carrier whose resource is associated with a CSI-RS in the plurality of uplink carriers is preferentially selected as the target uplink resource. For another example, a resource on an uplink carrier whose resource is associated with a relatively small quantity of candidate beams in the plurality of uplink carriers is the target uplink resource. For another example, in a carrier aggregation scenario, a resource (preferentially, a contention-free random access resource) on an uplink carrier of a cell whose candidate beam has relatively high quality is preferentially selected as the target uplink resource in the uplink carriers of the primary cell and the secondary cell. Each of these implementations may be used independently, or may be used in combination based on internal logic. Some of the foregoing implementations may be used to improve efficiency and a success rate of the BFR, some may be used to improve a data rate of a recovered beam, and some may be used to reduce resource costs of the network device.

In conclusion, in this embodiment of this application, when there are the plurality of uplink carriers used for the BFR, a resource selection solution that helps the beam failure recovery is proposed.

The foregoing describes, by using a beam failure recovery (BFR) scenario as an example, the method for selecting the target uplink resource from the plurality of uplink carriers to perform uplink transmission. However, this application is not limited thereto. The solution of determining the uplink resource in the plurality of uplink carriers provided in this application may be further applied to another uplink transmission scenario, for example, a scenario in which the terminal device reports a scheduling request message to the network device, or a scenario in which the terminal device reports uplink data to the network device.

In the foregoing embodiments, if the beam failure recovery request (BFRQ) message is replaced with an uplink scheduling request message, and the beam failure recovery (BFR) is replaced with uplink scheduling, a target uplink resource used to transmit the uplink scheduling request message may be determined in the plurality of uplink carriers.

Optionally, the contention-free random access resource in the foregoing embodiments is replaced with an uplink scheduling resource. In this way, an uplink scheduling resource on the NUL carrier may be preferentially selected to send the uplink scheduling request message, or an uplink scheduling resource on the SUL carrier may be preferentially selected to send the uplink scheduling request message. Alternatively, the target uplink carrier may be selected from the plurality of carriers based on beam attributes associated with resources on the uplink carriers, and the uplink scheduling request message is sent by using the uplink scheduling resource on the target uplink carrier.

In the foregoing embodiments, if the beam failure recovery request (BFRQ) message is replaced with uplink data, and the beam failure recovery (BFR) is replaced with uplink data transmission, a target uplink resource used to transmit the uplink data may be determined in the plurality of uplink carriers.

Optionally, the contention-free random access resource in the foregoing embodiments is replaced with an uplink resource. In this way, an uplink resource on the NUL carrier may be preferentially selected to send the uplink data, or an uplink resource on the SUL carrier may be preferentially selected to send the uplink data. Alternatively, the target uplink carrier may be selected from the plurality of carriers based on beam attributes associated with resources on the uplink carriers, and the uplink data is sent by using the uplink resource on the target uplink carrier.

In some scenarios, the uplink carrier on which the target uplink resource used by the terminal device to send the BFRQ message is located corresponds to a plurality of downlink carriers. For example, the terminal device sends the BFRQ message by using the contention-free random access resource on the SUL carrier, and the SUL carrier corresponds to a plurality of downlink carriers. In this scenario, the terminal device needs to determine, in the plurality of downlink carriers, a target downlink carrier used to receive the BFR response message sent by the network device; and determine, in a carrier bandwidth part (bandwidth part, BWP) on the target downlink carrier, a target BWP used to receive the BFR response.

Currently, there is no solution that is for determining a downlink resource and that is applicable to the foregoing scenario.

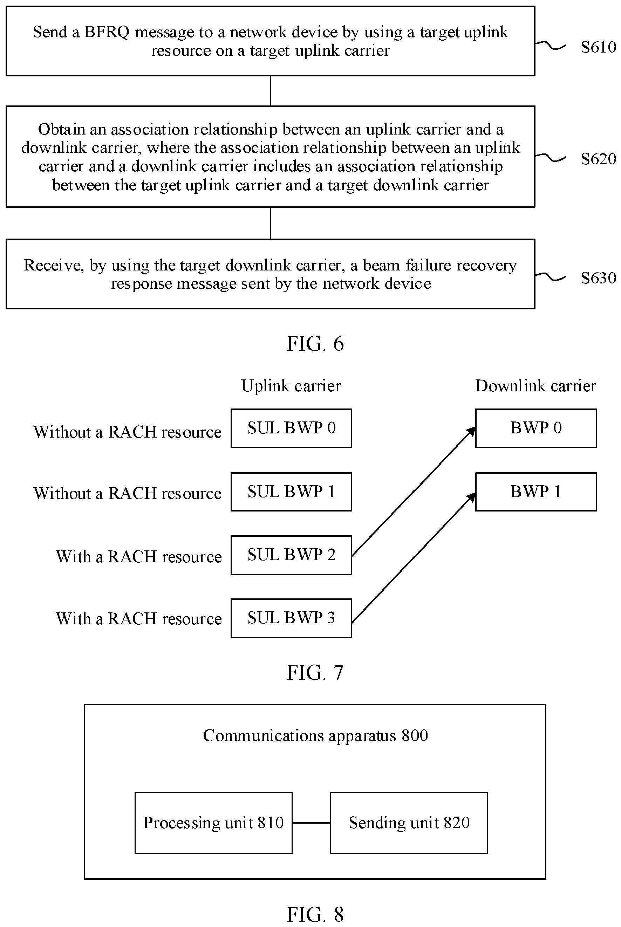

This application provides a method for determining a downlink resource. The method may be further applied to a scenario in which an uplink carrier on which a terminal device sends a BFRQ message corresponds to a plurality of downlink carriers. As shown in FIG. 6, the method includes the following steps.

S610. A terminal device sends a BFRQ message to a network device by using a target uplink resource on a target uplink carrier.

For example, the target uplink resource is a contention-based random access resource.

Optionally, the target uplink carrier corresponds to a plurality of downlink carriers. Each downlink carrier may have a plurality of BWPs, for example, four BWPs.

S620. The terminal device obtains an association relationship between an uplink carrier and a downlink carrier. The association relationship between an uplink carrier and a downlink carrier includes an association relationship between the target uplink carrier and a target downlink carrier.

The association relationship between the target uplink carrier and the target downlink carrier may be defined in a protocol, or may be configured by the network device.

S630. The terminal device receives, by using the target downlink carrier, a beam failure recovery response message (BFR response message for short) sent by the network device.

The solution provided in this application helps the terminal device effectively determine the downlink resource used to monitor the BFR response message.

The terminal device may obtain the association relationship between an uplink carrier and a downlink carrier, that is, obtain the target downlink carrier in a plurality of implementations.

Optionally, the association relationship between an uplink carrier and a downlink carrier is defined in a protocol, or may be set by default.

For example, the terminal device sends the BFRQ message by using a random access resource on an SUL carrier. The SUL carrier corresponds to a plurality of downlink carriers. The terminal device monitors the BFR response message on a downlink carrier of a primary cell by default. The primary cell is a PCell or a PSCell. In other words, by default, an association relationship exists between the SUL carrier and the downlink carrier of the primary cell.

For another example, the terminal device sends the BFRQ message by using a random access resource on an SUL carrier. The SUL carrier corresponds to a plurality of downlink carriers. The terminal device monitors the BFR response message on a downlink carrier of a cell by default in which the SUL carrier is located. In other words, by default, an association relationship exists between the SUL carrier and the downlink carrier of the same cell.

Optionally, the association relationship between an uplink carrier and a downlink carrier is preconfigured by the network device.

For example, the network device sends configuration information to the terminal device. The configuration information carries information about the association relationship between an uplink carrier and a downlink carrier.

For example, the association relationship between an uplink carrier and a downlink carrier is indicated by using indexes of cells in which the carriers are located. For example, the association relationship between an uplink carrier and a downlink carrier is indicated by using ServCellIndex or SCellIndex of the uplink carrier and ServCellIndex or SCellIndex of the downlink carrier.

Optionally, the association relationship between an uplink carrier and a downlink carrier indicates an association relationship that is between an uplink carrier and a downlink carrier and that is determined when the network device configures a contention-free random access resource.

The foregoing describes a case in which the terminal device determines, based on the association relationship between an uplink carrier and a downlink carrier, the target downlink carrier used to receive the BFR response message.

It should be understood that one downlink carrier may include a plurality of BWPs, for example, four BWPs. After determining the target downlink carrier, the terminal device further needs to determine the target BWP that is of the target downlink carrier and that is used to receive the BFR response message.

The terminal device may determine, in a plurality of implementations, the target BWP that is of the target downlink carrier and that is used to receive the BFR response message.

Optionally, a BWP that is of the target downlink carrier and whose index is the same as an index of a BWP used to send the BFRQ message is used as the target BWP.

For example, if the terminal device sends the BFRQ message on the SUL carrier by using a random access resource on a BWP x (x is an index (index) of a BWP), the terminal device may monitor the BFR response message on the BWP x of the target downlink carrier.

Optionally, in some scenarios, the downlink carrier has only one BWP. In this case, after the target downlink carrier is determined, the BFR response message may be directly monitored on one BWP of the target downlink carrier.

For example, there are random access resources on BWPs 0 to 3 of the SUL carrier, and there is only a BWP 0 on the downlink carrier. Regardless of which BWP of the SUL carrier is used by the terminal device to send the BFRQ message, the terminal device monitors the BFR response message on the BWP 0 of the target downlink carrier after determining the target downlink carrier.

Optionally, the target BWP that is of the target downlink carrier and that is used to receive the BFR response message is determined based on an association relationship between a BWP of the downlink carrier and a BWP of the uplink carrier.

For example, the association relationship between the BWP of the downlink carrier and the BWP of the uplink carrier indicates an ascending association relationship between an index of the BWP of the downlink carrier and an index of the BWP of the uplink carrier.

As shown in FIG. 7, an SUL carrier includes BWPs 0 to 3. The BWP 0 and the BWP 1 do not have a random access resource, and the BWP 2 and the BWP 3 have random access resources. A downlink carrier has a BWP 0 and a BWP 1. In FIG. 7, an association relationship between a BWP of the downlink carrier and a BWP of the uplink carrier is that the BWP 2 of the SUL carrier is associated with the BWP 0 of the downlink carrier, and the BWP 3 of the SUL carrier is associated with the BWP 1 of the downlink carrier. For example, if the terminal device sends a BFRQ message by using a random access resource on the BWP 2 of the SUL carrier obtained in FIG. 7, the terminal device monitors a BFR response message on the BWP 0 of the target downlink carrier. For another example, if the terminal device sends a BFRQ message by using a random access resource on the BWP 3 of the SUL carrier obtained in FIG. 7, the terminal device monitors a BFR response message on the BWP 1 of the target downlink carrier.

Optionally, the terminal device determines, based on configuration information of the network device, a target BWP that is on the target downlink carrier and that is used to receive the BFR response message. The configuration information includes information used to indicate an association relationship between a BWP of the target uplink carrier and a BWP of the target downlink carrier, or the configuration information includes a location used to indicate a BWP on which the terminal device receives the BFR response message.

Optionally, in this embodiment, both the target downlink carrier used to monitor the BFR response message and the target BWP used to monitor the BFR response message on the target downlink carrier may be configured by the network device for the terminal device, may be separately configured, or may be configured together.

For example, the network device sends the configuration information to the terminal device. The configuration information carries an association relationship between an uplink carrier and a downlink carrier. The association relationship between an uplink carrier and a downlink carrier includes an association relationship between the target uplink carrier and the target downlink carrier. The configuration information further includes an association relationship between a BWP of the target uplink carrier and a BWP of the target downlink carrier.

Therefore, in this embodiment of this application, even if an uplink carrier on which the BFRQ message is sent corresponds to a plurality of downlink carriers, the terminal device can determine a downlink carrier used to monitor the BFR response message.

Optionally, in some embodiments, if two uplink carriers of the terminal device are not QCL, for example, a carrier 1 is a low-frequency carrier, and a carrier 2 is a high-frequency carrier, beam failure recovery in this case may be referred to as cross-carrier beam failure recovery. The cross-carrier beam failure recovery may be performed in the following procedure:
(1) The network device configures an association relationship between a downlink carrier and an uplink RACH resource.
   For example, the network device configures an association relationship between an RACH resource on the carrier 1 and a downlink signal (a candidate beam) on the carrier 2. The network device may configure the association relationship by using an RRC message.
(2) Abeam failure occurs on the carrier 2.
(3) The terminal device searches for a new candidate beam on the carrier 2. A physical layer of the terminal device reports, to a MAC layer of the terminal device, a beam that meets a condition.
(4) The terminal device initiates a BFRQ message by using the RACH resource on the carrier 1. In four slots after the terminal device sends the BFRQ message, the terminal device starts to monitor, on the carrier 2, a response of the network device, that is, a PDCCH in a window on the carrier 2. A cyclic redundancy code (cyclic redundancy code, CRC) is scrambled by using a cell radio network temporary identifier (cell radio network temporary identifier, C-RNTI).
(5) The network device receives the BFRQ message of the terminal device on the carrier 1. It may be determined that a beam failure occurs on the carrier 2 for the terminal device, and a new beam requested by the terminal device may be determined based on the association relationship between an RACH resource and a beam.

Therefore, this embodiment provides a beam failure recovery solution of sending a BFRQ message on a high-frequency carrier (or a low-frequency carrier) and detecting a BFR response message on a low-frequency carrier (or a high-frequency carrier).

The foregoing cross-carrier beam failure recovery procedure may be applied to the following two scenarios:
(1) The carrier 2 has no associated or corresponding uplink carrier, or no corresponding uplink transmission resource or PRACH resource.
(2) The carrier 1 is a low-frequency uplink carrier. Because the low-frequency uplink carrier has better uplink coverage, a higher success rate is obtained for a corresponding RACH.

Optionally, in some embodiments, if two uplink carriers of the terminal device are QCL, for example, a carrier 1 and a carrier 2 are QCL and the carrier 1 and the carrier 2 operate at a high frequency band, beam failure recovery in this case may also be referred to as cross-carrier beam failure recovery. The cross-carrier beam failure recovery may be performed in the following procedure:
(1) The network device configures an association relationship between a downlink carrier and an uplink RACH resource.
   For example, the network device configures an association relationship between an RACH resource on the carrier 1 and a downlink signal (a candidate beam) on the carrier 2. The network device may configure the association relationship by using an RRC message.
(2) If a QCL relationship exists between reference signals used for beam failure detection (BFD) on the carrier 1 and the carrier 2, the beam failure detection may be performed on either the carrier 1 or the carrier 2. Calculation of a beam failure instance (beam failure instance) should include results of the beam failure detection on the two carriers.
(3) When the results of the beam failure detection are a beam failure, the terminal device may perform candidate beam detection on both the carrier 1 and the carrier 2.
(4) A MAC layer of the terminal device selects a corresponding RACH resource.
   Optionally, if a plurality of beams meet a condition, the terminal device may select a random access resource (RACH occasion, RO) that is closest in time, thereby accelerating a BFR process.
(5) Based on a configuration of the MAC layer of the terminal device, the physical layer of the terminal device may send RACH msg1 on the carrier 1 to perform a beam failure recovery request. After four slots, the terminal device starts to receive a BFR response message of the network device on the same carrier.

For example, the BFR response message of the network device may be a PDCCH. A CRC is scrambled by using a C-RNTI.

Therefore, this embodiment provides a beam failure recovery solution of sending a BFRQ message on a high-frequency carrier and detecting a BFR response message on a high-frequency carrier.

The embodiments described in this specification may be independent solutions, or may be combined based on internal logic. These solutions all fall within the protection scope of this application.

It may be understood that, in the foregoing method embodiments, the methods and the operations implemented by the terminal device may be alternatively implemented by a component (for example, a chip or a circuit) that may be used in the terminal device, and the methods and the operations implemented by the network device may be alternatively implemented by a component (for example, a chip or a circuit) that may be used in the network device.

The foregoing describes the method embodiments provided in the embodiments of this application, and the following describes apparatus embodiments provided in the embodiments of this application. It should be understood that descriptions of the apparatus embodiments correspond to the descriptions of the method embodiments. Therefore, for content that is not described in detail, refer to the foregoing method embodiment. For brevity, details are not described herein again.

The foregoing mainly describes the solutions provided in the embodiments of this application from a perspective of interaction between network elements. It may be understood that to implement the foregoing functions, each network element such as a transmit-end device or a receive-end device includes a corresponding hardware structure and/or software module for implementing each function. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the transmit-end device and the receive-end device may be divided into function modules based on the foregoing method examples. For example, each function module may be obtained through division for each corresponding function, or two or more functions may be integrated into one processing module. The integrated module may be implemented in a form of hardware, or may be implemented in a form of a software function module. It should be noted that, in this embodiment of this application, module division is an example, and is merely a logical function division. In actual implementation, another division manner may be used. The following is described by using an example in which each function module is obtained through division based on each corresponding function.

As shown in FIG. 8, an embodiment of this application further provides a communications apparatus 800. The communications apparatus 800 may be a terminal device, or may be a component (for example, a chip or a circuit) that can be used in a terminal device. The communications apparatus 800 includes a processing unit 810 and a sending unit 820. The processing unit 810 is configured to perform processing steps on the terminal device side in the foregoing method embodiments, and the sending unit 820 is configured to perform sending steps on the terminal device side in the foregoing method embodiments.

For operations or implementations of the processing unit 810 and the sending unit 820, refer to related descriptions in the method embodiments. Details are not described herein again.

The processing unit 810 may be implemented by using a processor or a processor-related circuit.

The sending module 820 may be implemented by a transmitter or a transmitter-related circuit.

Optionally, the communications apparatus 800 may further include a receiving unit, configured to perform receiving steps on the terminal device side in the foregoing method embodiments. The receiving unit may be implemented by a receiver or a receiver-related circuit.

The sending unit 820 and the receiving unit in the communications apparatus 800 may be integrated into a transceiver unit. This is not limited in this embodiment of this application.

An embodiment of this application further provides a first communications apparatus. The first communications apparatus may be a terminal device, or may be a chip. The first communications apparatus may be configured to perform an action performed by the terminal device in the foregoing method embodiments.

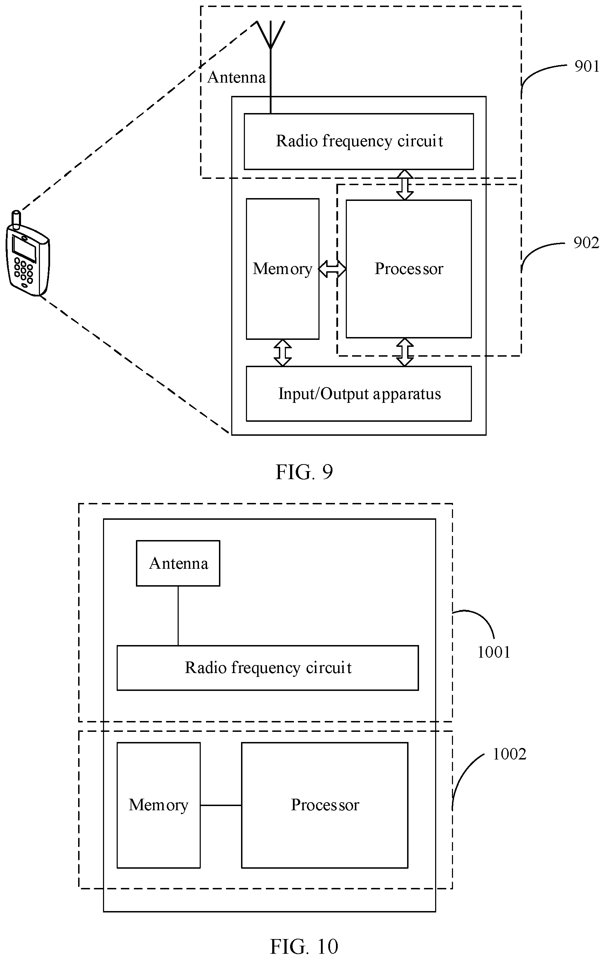

When the first communications apparatus is a terminal device, FIG. 9 is a simplified schematic structural diagram of a terminal device. For ease of understanding and illustration, in FIG. 9, that the terminal device is a mobile phone is used as an example. As shown in FIG. 9, the terminal device includes a processor, a memory, a radio frequency circuit, an antenna, and an input/output apparatus. The processor is mainly configured to: process a communication protocol and communication data, control the terminal device, execute a software program, process data of the software program, or the like. The memory is mainly configured to store a software program and data. The radio frequency circuit is mainly configured to: perform conversion between a baseband signal and a radio frequency signal, and process a radio frequency signal. The antenna is mainly configured to receive and send a radio frequency signal in an electromagnetic wave form. The input/output apparatus such as a touchscreen, a display screen, or a keyboard is mainly configured to: receive data entered by a user, and output data to the user. It should be noted that terminal devices of some types may not have the input/output apparatus.

When data needs to be sent, after performing baseband processing on to-be-sent data, the processor outputs a baseband signal to the radio frequency circuit. After performing radio frequency processing on the baseband signal, the radio frequency circuit sends a radio frequency signal in an electromagnetic wave form through the antenna. When data is sent to the terminal device, the radio frequency circuit receives a radio frequency signal by using the antenna, converts the radio frequency signal into a baseband signal, and outputs the baseband signal to the processor; and the processor converts the baseband signal into data, and processes the data. For ease of description, FIG. 9 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in the embodiment of this application.

In this embodiment of this application, an antenna and a radio frequency circuit that have receiving and sending functions may be considered as a transceiver unit of the terminal device, and a processor that has a processing function may be considered as a processing unit of the terminal device.

As shown in FIG. 9, the terminal device includes a transceiver unit 901 and a processing unit 902. The transceiver unit 902 may also be referred to as a transceiver, a transceiver, a transceiver apparatus, or the like. The processing unit 901 may also be referred to as a processor, a processing board, a processing module, a processing apparatus, or the like. Optionally, the memory may be located in the processing unit 901, or may be independently located outside the processing unit 901 (for example, in FIG. 9, the memory is independently located outside the processing unit 901). Optionally, a component that is in the transceiver unit 901 and that is configured to implement a receiving function may be considered as a receiving unit, and a component that is in the transceiver unit 901 and that is configured to implement a sending function may be considered as a sending unit. In other words, the transceiver unit 901 includes a receiving unit and a sending unit. In some cases, the transceiver unit may also be referred to as a transceiver, a transceiver, a transceiver circuit, or the like. In some cases, the receiving unit may also be referred to as a receiver, a receiver, a receiving circuit, or the like. In some cases, the sending unit may also be referred to as a transmitter, a transmitter, a transmit circuit, or the like.

For example, in an implementation, the processing unit 902 is configured to perform step S310 in FIG. 3, and/or the processing unit 902 is further configured to perform another processing step on the terminal device side in the embodiments of this application. The transceiver unit 901 is configured to perform step S320 in FIG. 3, and/or the transceiver unit 901 is further configured to perform another sending/receiving step on the terminal device side in the embodiments of this application.

For another example, in another implementation, the transceiver unit 901 is configured to perform the sending operation on the terminal device side in step S404, step S408, step S411, or step S413 in FIG. 4A, FIG. 4B and FIG. 4C, the transceiver unit 901 is configured to perform the receiving operation on the terminal device side in step S414 in FIG. 4A, FIG. 4B and FIG. 4C, and/or the transceiver unit 901 is further configured to perform another sending/receiving step on the terminal device side in the embodiments of this application. The processing unit 902 is configured to perform the processing operation on the terminal device side in FIG. 4A, FIG. 4B and FIG. 4C, for example, step S401, step S402, and another processing step.

For still another example, in another implementation, the transceiver unit 901 is configured to perform the sending step on the terminal device side in step S504, step S507, step S511, or step S513 in FIG. 5A, FIG. 5B and FIG. 5C, the transceiver unit 901 is further configured to perform the receiving step on the terminal device side in step S514 in FIG. 5A, FIG. 5B and FIG. 5C, and/or the transceiver unit 901 is further configured to perform another sending/receiving step on the terminal device side in the embodiments of this application. The processing unit 902 is configured to perform another processing step on the terminal device side in FIG. 5A, FIG. 5B and FIG. 5C.

For still another example, in another implementation, the transceiver unit 901 is configured to perform the sending step on the terminal device side in step S610 in FIG. 6, the transceiver unit 901 is further configured to perform the receiving step on the terminal device side in step S630 in FIG. 6, and/or the transceiver unit 901 is further configured to perform another sending/receiving step on the terminal device side in the embodiments of this application. The processing unit 902 is configured to perform the processing step in step S620 in FIG. 6 and/or another processing step performed by the processing unit 902 on the terminal device side.

It may be understood that the foregoing terminal device including the transceiver unit and the processing unit may not depend on the structure shown in FIG. 9.

When the first communications apparatus is a chip, the chip includes a transceiver unit and a processing unit. The transceiver unit may be an input/output circuit or a communications interface. The processing unit is a processor, a microprocessor, or an integrated circuit integrated on the chip.

It should be understood that FIG. 9 is merely an example instead of a limitation.

It may be understood that, for operations or implementations of units/modules in the communications apparatus, reference may be further made to related descriptions in the method embodiments. Details are not described herein again.

An embodiment of this application further provides a communications apparatus. The communications apparatus may be a network device, or may be a chip. For example, the communications apparatus includes a processing unit and a transceiver unit, which is similar to the structure in FIG. 8 (the sending unit in FIG. 8 is replaced with the transceiver unit). The processing unit is configured to perform the processing steps on the network device side in the foregoing method embodiments, for example, generate configuration information on the terminal device side. The transceiver unit is configured to perform the receiving and sending steps on the network device side in the foregoing method embodiments, for example, receive a BFRQ message sent by a terminal device, send a BFR response message to a terminal device, or send configuration information of an uplink resource to a terminal device. The processing unit may be implemented by using a processor or a processor-related circuit. The transceiver unit may be implemented by a transceiver or a transceiver-related circuit.

An embodiment of this application further provides a second communications apparatus. The second communications apparatus may be a network device, or may be a chip. The second communications apparatus may be configured to perform an action performed by the network device in the foregoing method embodiments.

When the second communications apparatus is a network device, for example, a base station, FIG. 10 is a simplified schematic structural diagram of a base station. The base station includes a part 1001 and a part 1002. The part 1001 is mainly configured to: receive and send a radio frequency signal, and perform conversion between a radio frequency signal and a baseband signal. The part 1002 is mainly configured to: perform baseband processing, control the base station, and the like. The part 1001 may be usually referred to as a transceiver unit, a transceiver, a transceiver circuit, a transceiver, or the like. The 1002 part is usually a control center of the base station, may be usually referred to as a processing unit, and is configured to control the base station to perform the action of generating a first message by the network device in the foregoing method embodiments. For details, refer to descriptions of the related parts.

Optionally, the memory may be integrated into the processing unit, that is, integrated into the part 1002 shown in FIG. 10 (as shown in FIG. 10); or the memory may be independently located outside the processing unit, that is, independently located outside the part 1002 shown in FIG. 10.

The transceiver unit in the part 1001 may also be referred to as a transceiver, a transceiver, or the like. The transceiver unit includes an antenna and a radio frequency unit. The radio frequency unit is mainly configured to perform radio frequency processing. Optionally, in the part 1001, a component configured to implement a receiving function may be considered as a receiving unit, and a component configured to implement a sending function may be considered as a sending unit. In other words, the part 1001 includes the receiving unit and the sending unit. The receiving unit may also be referred to as a receiver, a receiver, a receiving circuit, or the like, and the sending unit may be referred to as a transmitter, a transmitter, a transmit circuit, or the like.

The 1002 part may include one or more boards. Each board may include one or more processors and one or more memories, and the processor is configured to read and execute a program in the memory, to implement a baseband processing function and control the base station. If a plurality of boards exist, the boards may be interconnected to increase a processing capability. In an optional implementation, alternatively, the plurality of boards may share one or more processors, or the plurality of boards share one or more memories, or the plurality of boards share one or more processors at the same time.

For example, in an implementation, the transceiver unit is configured to perform a receiving operation on the network device side in step S320 in FIG. 3, and/or the transceiver unit is further configured to perform another sending/receiving step on the terminal device side in the embodiments of this application. The processing unit is configured to perform another processing step on the network device side in the embodiments of this application.

For another example, in another implementation, the transceiver unit is configured to perform the receiving operation on the network device side in step S404, step S408, step S411, or step S413 in FIG. 4A, FIG. 4B and FIG. 4C, and the transceiver unit is further configured to perform the sending operation on the network device side in step S414 in FIG. 4A, FIG. 4B and FIG. 4C and/or another step in this application. The processing unit is configured to perform the processing steps on the network device side in the embodiments of this application, for example, generate configuration information of the terminal device.

For still another example, in another implementation, the transceiver unit is configured to perform the receiving operation on the network device side in step S504, step S507, step S511, or step S513 in FIG. 5A, FIG. 5B and FIG. 5C, and the transceiver unit is further configured to perform the sending operation on the network device side in step S514 in FIG. 5A, FIG. 5B and FIG. 5C and/or another step in this application. The processing unit is configured to perform the processing steps on the network device side in the embodiments of this application, for example, generate configuration information of the terminal device.

For still another example, in another implementation, the transceiver unit is configured to perform the receiving operation on the network device side in step S610 in FIG. 6, and the transceiver unit is further configured to perform the sending operation on the network device side in step S630 in FIG. 6 and/or another step in this application. The processing unit is configured to perform the processing steps on the network device side in the embodiments of this application, for example, generate configuration information of the terminal device.

It may be understood that the foregoing network device including the transceiver unit and the processing unit may not depend on the structure shown in FIG. 10.

When the second communications apparatus is a chip, the chip includes a transceiver unit and a processing unit. The transceiver unit may be an input/output circuit or a communications interface. The processing unit is a processor, a microprocessor, or an integrated circuit integrated on the chip.

It may be understood that, for operations or implementations of modules in the communications apparatus, reference may be further made to related descriptions in the method embodiments. Details are not described herein again. In the embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing by using a process (process), for example, a Linux operating system, a Unix operating system, an Android operating system, an iOS operating system, or a Windows operating system The application layer includes applications such as a browser, an address book, word processing software, and instant messaging software. In addition, this embodiment of this application does not particularly limit a specific structure of an execution body of the method provided in the embodiments of this application, provided that a program recording code of the method provided in the embodiments of this application can be run to implement communication according to the method provided in the embodiments of this application. For example, the execution body of the method provided in the embodiments of this application may be the terminal device or the network device, or may be a function module that can invoke and execute a program in the terminal device or the network device.

In addition, aspects or features of this application may be implemented as a method, an apparatus, or a product that uses standard programming and/or engineering technologies. The term "product" used in this application covers a computer program that can be accessed from any computer readable component, carrier, or medium. For example, the computer-readable medium may include but is not limited to: a magnetic storage component (for example, a hard disk, a floppy disk or a magnetic tape), an optical disc (for example, a compact disc (compact disc, CD)), a digital versatile disc (digital versatile disc, DVD), a smart card and a flash memory component (for example, erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry an instruction and/or data.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining an uplink resource, comprising:
determining a target uplink resource in resources on a plurality of uplink carriers; and
sending a beam recovery request to a network device by using the target uplink resource.

2. The method according to claim 1, wherein the determining a target uplink resource in resources on a plurality of uplink carriers comprises:
determining, when at least one of the plurality of uplink carriers has a contention-free resource, a contention-free resource on one uplink carrier of the at least one uplink carrier as the target uplink resource.

3. The method according to claim 2, wherein the plurality of uplink carriers comprise a primary uplink carrier and a supplementary uplink carrier of a current cell; and
the determining a contention-free resource on one uplink carrier of the at least one uplink carrier as the target uplink resource comprises:
determining, when the at least one uplink carrier comprises the primary uplink carrier, a contention-free resource on the primary uplink carrier as the target uplink resource.

4. The method according to claim 2, wherein the plurality of uplink carriers comprise a primary uplink carrier and a supplementary uplink carrier of a current cell; and
the determining a contention-free resource on one uplink carrier of the at least one uplink carrier as the target uplink resource comprises:
determining, when the at least one uplink carrier comprises the supplementary uplink carrier, a contention-free resource on the supplementary uplink carrier as the target uplink resource.

5. The method according to claim 3 or 4, wherein the determining a contention-free resource on one uplink carrier of the at least one uplink carrier as the target uplink resource comprises:
determining, when quality of a candidate beam of the current cell exceeds a threshold, the contention-free resource on the primary uplink carrier as the target uplink resource; or
determining, when quality of a candidate beam of the current cell is lower than a threshold, the contention-free resource on the supplementary uplink carrier as the target uplink resource.

6. The method according to any one of claims 3 to 5, wherein
the determining the contention-free resource on the primary uplink carrier as the target uplink resource comprises: determining, when a beam failure recovery timer on the primary uplink carrier does not expire, the contention-free resource on the primary uplink carrier as the target uplink resource; or
the determining the contention-free resource on the supplementary uplink carrier as the target uplink resource comprises: determining, when a beam failure recovery timer on the supplementary uplink carrier does not expire, the contention-free resource on the supplementary uplink carrier as the target uplink resource.

7. The method according to claim 1, wherein the plurality of uplink carriers comprise a primary uplink carrier and a supplementary uplink carrier that are currently working; and
the determining a target uplink resource in resources on a plurality of uplink carriers comprises:
determining, when the plurality of uplink carriers do not have an available contention-free resource, a contention-based resource on the supplementary uplink carrier as the target uplink resource.

8. The method according to claim 1, wherein the plurality of uplink carriers comprise a primary uplink carrier and a supplementary uplink carrier of a current primary cell and an uplink carrier of a secondary cell; and
the determining a target uplink resource in resources on a plurality of uplink carriers comprises:
determining, when the primary uplink carrier of the primary cell does not have an available contention-free resource, a contention-free resource on the uplink carrier of the secondary cell as the target uplink resource; or
determining, when the primary uplink carrier and the supplementary uplink carrier of the primary cell do not have an available contention-free resource, a resource on the uplink carrier of the secondary cell as the target uplink resource.

9. The method according to claim 1, wherein the determining a target uplink resource in resources on a plurality of uplink carriers comprises:
selecting, based on beam attributes associated with the resources on the plurality of uplink carriers, a target uplink carrier from the plurality of uplink carriers; and
determining a resource on the target uplink carrier as the target uplink resource.

10. The method according to claim 9, wherein the plurality of uplink carriers comprise a first carrier and a second carrier, wherein a resource on the first carrier is associated with a channel state information-reference signal CSI-RS, and a resource on the second carrier is associated with a synchronization signal block SSB; and
the selecting the target uplink carrier from the plurality of uplink carriers comprises:
determining the first carrier as the target uplink resource.

11. The method according to claim 9, wherein the plurality of uplink carriers comprise a third carrier and a fourth carrier, wherein a quantity of candidate beams associated with a resource on the third carrier is less than or equal to a quantity of candidate beams associated with a resource on the fourth carrier; and
the selecting the target uplink carrier from the plurality of uplink carriers comprises:
determining the third carrier as the target uplink resource.

12. The method according to claim 1, wherein the determining a target uplink resource in a plurality of uplink carriers comprises:
selecting, based on preset priority information, a target uplink carrier from the plurality of uplink carriers, wherein the preset priority information is used to indicate a resource use sequence of the plurality of uplink carriers; and
determining, on the target uplink carrier, the target uplink resource.

13. The method according to claim 1, wherein the plurality of uplink carriers comprise an uplink carrier of a primary cell and an uplink carrier of a secondary cell; and
the determining a target uplink resource in a plurality of uplink carriers comprises:
selecting, based on quality of a candidate beam of the primary cell and quality of a candidate beam of the secondary cell, a resource on the uplink carrier of the primary cell or a resource on the uplink carrier of the secondary cell as the target uplink carrier.

14. The method according to claim 13, wherein the selecting a resource on the uplink carrier of the primary cell or a resource on the uplink carrier of the secondary cell as the target uplink carrier comprises:
selecting, when a sum of reference signal received power RSRP of the candidate beam of the primary cell and a preset offset is greater than or equal to RSRP of the candidate beam of the secondary cell, the uplink carrier of the primary cell as the target uplink carrier.

15. The method according to claim 1, wherein the target uplink resource is a contention-based resource; and the method further comprises:
receiving, from the network device, an association relationship between an uplink carrier and a downlink carrier; and
receiving, by using a downlink carrier associated with an uplink carrier on which the target uplink resource is located, a beam recovery response message sent by the network device.

16. A communications apparatus, comprising:
a processing unit, configured to determine a target uplink resource in resources on a plurality of uplink carriers; and
a transceiver unit, configured to send a beam recovery request to a network device by using the target uplink resource determined by the processing unit.

17. The communications apparatus according to claim 16, wherein the processing unit is configured to determine, when at least one of the plurality of uplink carriers has a contention-free resource, a contention-free resource on one uplink carrier of the at least one uplink carrier as the target uplink resource.

18. The communications apparatus according to claim 17, wherein the plurality of uplink carriers comprise a primary uplink carrier and a supplementary uplink carrier of a current cell; and
the processing unit is configured to determine, when the at least one uplink carrier comprises the primary uplink carrier, a contention-free resource on the primary uplink carrier as the target uplink resource.

19. The communications apparatus according to claim 17, wherein the plurality of uplink carriers comprise a primary uplink carrier and a supplementary uplink carrier of a current cell; and
the processing unit is configured to determine, when the at least one uplink carrier comprises the supplementary uplink carrier, a contention-free resource on the supplementary uplink carrier as the target uplink resource.

20. The communications apparatus according to claim 18 or 19, wherein the processing unit is configured to:
determine, when quality of a candidate beam of the current cell exceeds a threshold, the contention-free resource on the primary uplink carrier as the target uplink resource; or
determine, when quality of a candidate beam of the current cell is lower than a threshold, the contention-free resource on the supplementary uplink carrier as the target uplink resource.

21. The communications apparatus according to any one of claims 18 to 20, wherein the processing unit is configured to:
determine, when a beam failure recovery timer on the primary uplink carrier does not expire, the contention-free resource on the primary uplink carrier as the target uplink resource; or
determine, when a beam failure recovery timer on the supplementary uplink carrier does not expire, the contention-free resource on the supplementary uplink carrier as the target uplink resource.

22. The communications apparatus according to claim 16, wherein the plurality of uplink carriers comprise a primary uplink carrier and a supplementary uplink carrier that are currently working; and
the processing unit is configured to determine, when the plurality of uplink carriers do not have an available contention-free resource, a contention-based resource on the supplementary uplink carrier as the target uplink resource.

23. The communications apparatus according to claim 16, wherein the plurality of uplink carriers comprise a primary uplink carrier and a supplementary uplink carrier of a current primary cell and an uplink carrier of a secondary cell; and
the processing unit is configured to:
determine, when the primary uplink carrier of the primary cell does not have an available contention-free resource, a contention-free resource on the uplink carrier of the secondary cell as the target uplink resource; or
determine, when the primary uplink carrier and the supplementary uplink carrier of the primary cell do not have an available contention-free resource, a resource on the uplink carrier of the secondary cell as the target uplink resource.

24. The communications apparatus according to claim 16, wherein the processing unit is configured to select, based on beam attributes associated with the resources on the plurality of uplink carriers, a target uplink carrier from the plurality of uplink carriers; and determine a resource on the target uplink carrier as the target uplink resource.

25. The communications apparatus according to claim 24, wherein the plurality of uplink carriers comprise a first carrier and a second carrier, wherein a resource on the first carrier is associated with a channel state information-reference signal CSI-RS, and a resource on the second carrier is associated with a synchronization signal block SSB; and
the processing unit is configured to determine the first carrier as the target uplink resource.

26. The communications apparatus according to claim 24, wherein the plurality of uplink carriers comprise a third carrier and a fourth carrier, wherein a quantity of candidate beams associated with a resource on the third carrier is less than or equal to a quantity of candidate beams associated with a resource on the fourth carrier; and
the processing unit is configured to determine the third carrier as the target uplink resource.

27. The communications apparatus according to claim 16, wherein the processing unit is configured to select, based on preset priority information, a target uplink carrier from the plurality of uplink carriers, wherein the preset priority information is used to indicate a resource use sequence of the plurality of uplink carriers; and determine the target uplink resource on the target uplink carrier.

28. The communications apparatus according to claim 16, wherein the plurality of uplink carriers comprise an uplink carrier of a primary cell and an uplink carrier of a secondary cell; and
the processing unit is configured to select, based on quality of a candidate beam of the primary cell and quality of a candidate beam of the secondary cell, a resource on the uplink carrier of the primary cell or a resource on the uplink carrier of the secondary cell as the target uplink carrier.

29. The communications apparatus according to claim 28, wherein the processing unit is configured to select, when a sum of reference signal received power RSRP of the candidate beam of the primary cell and a preset offset is greater than or equal to RSRP of the candidate beam of the secondary cell, the uplink carrier of the primary cell as the target uplink carrier.

30. The communications apparatus according to claim 16, wherein the target uplink resource is a contention-based resource; and
the transceiver unit is further configured to receive, from the network device, an association relationship between an uplink carrier and a downlink carrier; and receive, by using a downlink carrier associated with an uplink carrier on which the target uplink resource is located, a beam recovery response message sent by the network device.

31. A communications apparatus, comprising a memory and a processor, wherein the memory is configured to store an instruction, and the processor is configured to execute the instruction stored in the memory, and execution of the instruction stored in the memory enables the processor to perform the method according to any one of claims 1 to 15.

32. A computer storage medium, wherein the computer storage medium stores a computer program, and when the computer program is executed by a computer, the computer is enabled to perform the method according to any one of claims 1 to 15.
